# EUROPEAN PATENT APPLICATION

(11) **EP 4 755 198 A1**
(43) Date of publication of application: **10.06.2026**
(21) Application number: 24839540.2
(22) Date of filing: 27.06.2024
(51) Int. Cl.: A23L 2/00, C12C 5/02, C12C 11/00, C12G 1/022, C12G 3/04, C12H 6/02

(54) **METHOD FOR PRODUCING BEVERAGE WITH ENHANCED AROMA OF CITRUS FRUIT**

(30) Priority: 07.07.2023 JP 2023112512
(71) Applicant: KIRIN HOLDINGS KABUSHIKI KAISHA, Nakano-ku, Tokyo 164-0001 (JP)
(72) Inventor: KANO, Tomonori, Tokyo 164-0001 (JP); OTA, Reiko, Tokyo 164-0001 (JP); IWAYA, Takuro, Tokyo 164-0001 (JP); HORIE, Akira, Tokyo 164-0001 (JP); KATOU, Masaru, Tokyo 164-0001 (JP)
(74) Representative: Hoffmann Eitle
(86) International application number: PCT/JP2024/023353
(87) International publication number: WO 2025/013648

(57) **Abstract**

The object of the present invention is to provide, for example, a beverage in which the concentrations of β-citronellol, nerol, and geraniol are increased and the citrus fruit aroma is enhanced, a method for producing the beverage, and a method of increasing the concentrations of β-citronellol, nerol, and geraniol in a beverage to enhance a citrus fruit aroma. Note that the above "concentrations of β-citronellol, nerol, and geraniol" may be the "concentrations of β-citronellol, nerol, and/or geraniol" or the "concentrations of linalool, β-citronellol, nerol, and/or geraniol". The present invention also relates to, for example, a method for producing a beverage, comprising the step of adding a composition for food products which has lipase activity in the production of the above beverage using a plant-derived raw material, and to a beverage produced by such a production method.

## Description

### Technical Field

The present invention relates to a method for producing a beverage with an enhanced citrus fruit aroma, a beverage produced by the method for producing the beverage, and a method of enhancing a citrus fruit aroma of a beverage, and the like.

### Background Art

Global warming, geopolitical risks, and other factors are causing raw material prices to rise and making it increasingly difficult in many cases to procure raw materials. In order to avoid these issues as much as possible, for example, there is a need for a technology that can produce highly aromatic beverages even when the amount of raw materials used is small.

As a method of enhancing the fruitiness of a beverage, it is common to use raw materials with strong fruity characteristics or to increase the usage amount of such raw materials; however, these methods involve the above-mentioned issues. On the other hand, a large number of techniques have been reported to enhance the fruitiness of beverages by applying special processing to raw materials. For example, Patent Document 1 (JP-A-2013-132275) describes a "method for producing a fermented malt beverage using hops as a raw material, wherein the hops are preheated under conditions at a temperature of 65°C or more and less than 90°C for 1 minute or more and less than 60 minutes; and the hops are added to a raw material mixture after all steps involving heating operations included in the method have been completed and the heated raw material mixture has been cooled". Patent Document 2 (JP-A-2004-081113) describes a "method for producing a fermented malt beverage characterized in that in the production of the fermented malt beverage, fresh hops or their crushed products frozen without drying after collection are used as a hops raw material or as a fresh hops flavor. However, the methods described in Patent Documents 1 and 2 have issues such as complex processes, high energy consumption, and high processing costs.

Meanwhile, regarding the use of lipase in beverage production, for example, Patent Document 3 (JP-A-2002-045166) describes a "method for brewing an aromatic alcoholic beverage characterized by adding lipase or a lipase-containing enzyme preparation to the mash and fermenting it to increase the content of ethyl caproate in the alcoholic beverage". In addition, Patent Document 4 (JP-A-2020-103245) describes a method of reducing a purine compound, comprising a saccharification step of saccharifying starch in a raw material liquid, wherein lipase and lactic acid are added to the raw material liquid, the lipase is allowed to act in the raw material liquid under conditions at pH 4.4 or higher and less than 5.5, and, after fermenting the raw material liquid with yeast, the fermented liquid is treated with activated carbon. Patent Document 4 states that such treatment can reduce a purine compound and increase the concentrations of ethyl acetate and isoamyl acetate. Note that it is known that ethyl acetate has a pineapple-like fragrance and isoamyl acetate has a banana-like fragrance.

### Prior Art Documents

### Patent Documents

Patent Document 1: Japanese unexamined Patent Application Publication No. 2013-132275
Patent Document 2: Japanese unexamined Patent Application Publication No. 2004-081113
Patent Document 3: Japanese unexamined Patent Application Publication No. 2002-045166
Patent Document 4: Japanese unexamined Patent Application Publication No. 2020-103245

### Summary of the Invention

### Object to be Solved by the Invention

The object of the present invention is to provide, for example, a beverage in which the concentrations of β-citronellol, nerol, and geraniol (hereinafter, also referred to as "β-citronellol and the like") are increased and the citrus fruit aroma is enhanced, a method for producing the beverage, and a method of increasing the concentrations of β-citronellol, nerol, and geraniol in a beverage to enhance a citrus fruit aroma. Note that as used herein, the above "concentrations of β-citronellol, nerol, and geraniol" or "concentrations of β-citronellol and the like" may be the "concentrations of β-citronellol, nerol, and/or geraniol" or the "concentrations of linalool, β-citronellol, nerol, and/or geraniol".

### Means to Solve the Object

In order to solve the object of the present invention, the present inventors have conducted intensive research and found that, in the production of a beverage using a plant-derived raw material, the addition of a composition for food products which has lipase activity to a raw material liquid can increase the "concentrations of β-citronellol, nerol, and geraniol", the "concentrations of β-citronellol, nerol, and/or geraniol", and/or the "concentrations of linalool, β-citronellol, nerol, and/or geraniol" to enhance a citrus fruit aroma and the like. Then, the present invention has been completed. It was surprising to those skilled in the art that the concentrations of β-citronellol and the like are increased by adding a composition for food products which has lipase activity to a raw material liquid in the production of a beverage using a plant-derived raw material.

Specifically, the present invention provides the following items of the invention.
(1) A method for producing a beverage, comprising step A of adding a composition for food products which has lipase activity to a raw material liquid, in the production of the beverage using a plant-derived raw material.
(2) The production method according to (1), wherein the composition for food products which has lipase activity is added so that the lipase activity per mL of the raw material liquid is 0.01 U or more.
(3) The production method according to (1) or (2), wherein step A of adding the composition for food products which has lipase activity to the raw material liquid is performed at one or more stages selected from the group consisting of during preparation of a pre-fermentation liquid, before a start of fermentation, during fermentation, and after an end of fermentation.
(4) The production method according to any one of (1) to (3), wherein the beverage is selected from the group consisting of beer-taste beverages, fruit wine beverages, fruit juice-containing alcoholic beverages, and whiskeys.
(5) The production method according to any one of (1) to (4), wherein the beverage is a beer-taste beverage or a fruit wine beverage.
(6) The production method according to any one of (1) to (5), wherein when the production method of the beverage includes steps of heating and cooling the raw material liquid, step A of adding the composition for food products which has lipase activity to the raw material liquid is performed during or after the step of cooling the raw material liquid.
(7) The production method according to any one of (1) to (6), wherein the plant-derived raw material is one or more materials selected from the group consisting of hops, malt, harvested cereals other than malt, grains, tubers, beans, fruit juices, fruits, and spices.
(8) The production method according to any one of (1) to (7), comprising a step of allowing microbial metabolism to act on the raw material liquid.
(9) A beverage produced by the production method according to any one of (1) to (8).
(10) A method of enhancing a citrus fruit aroma of a beverage in the production of the beverage using a plant-derived raw material, the method comprising step A of adding a composition for food products which has lipase activity to a raw material liquid, to increase concentrations of β-citronellol, nerol, and geraniol in the beverage.
(11) A method of enhancing a citrus fruit aroma of a beverage in the production of the beverage using a plant-derived raw material, the method comprising step A of adding a composition for food products which has lipase activity to a raw material liquid, to increase a total concentration of β-citronellol, nerol, and geraniol in the beverage.
(12) A method of enhancing a citrus fruit aroma of a beverage in the production of the beverage using a plant-derived raw material, the method comprising step A of adding a composition for food products which has lipase activity to a raw material liquid, to increase a total concentration of linalool, β-citronellol, nerol, and geraniol in the beverage.

### Effect of the Invention

The present invention can provide, for example, a beverage in which the concentrations of β-citronellol, nerol, and geraniol are increased and the citrus fruit aroma is enhanced, a method for producing the beverage, and a method of increasing the concentrations of β-citronellol, nerol, and geraniol in a beverage to enhance a citrus fruit aroma. Note that the above "concentrations of β-citronellol, nerol, and geraniol" may be the "concentrations of β-citronellol, nerol, and/or geraniol" or the "concentrations of linalool, β-citronellol, nerol, and/or geraniol".

### Mode of Carrying Out the Invention

The present invention includes embodiments of, for instance,
[1] a method for producing a beverage, comprising the step of adding a composition for food products which has lipase activity to a raw material liquid, in the production of the beverage using a plant-derived raw material (hereinafter, also referred to as a "production method of the present invention");
[2] a beverage produced by the production method of the present invention (hereinafter, also referred to as a "beverage of the present invention"); and
[3] a method of enhancing a citrus fruit aroma of a beverage in the production of the beverage using a plant-derived raw material, the method comprising the step of adding a composition for food products which has lipase activity to a raw material liquid, to increase "concentrations of β-citronellol, nerol, and geraniol", "concentrations of β-citronellol, nerol, and/or geraniol", and/or "concentrations of linalool, β-citronellol, nerol, and/or geraniol" in the beverage (hereinafter, also indicated as an "enhancement method of the present invention").

The numerical values of the upper and lower limits illustrated herein may be provided, if appropriate, as numerical ranges by combining the numerical values of the upper and lower limits, respectively, which may constitute numerical ranges, and such numerical ranges are disclosed herein.

### (composition for food products which has lipase activity)

The "composition for food products which has lipase activity" is not particularly limited as long as the composition has lipase activity and can be added to food products. Examples of the lipase include enzymes that hydrolyze one or more of fatty acids from lipids. Examples of the lipase activity include activity to hydrolyze the ester bond between fatty acid and a hydroxyl group of glycerol.

Specific examples of the above "composition for food products which has lipase activity" include a food additive having lipase activity and a food and/or a raw material having lipase activity. Preferable examples include a food additive having lipase activity. Examples of the lipase included in the above composition for food products include a microorganism-derived lipase and a plant-derived lipase, which may be used in combination.

Examples of the "food additive having lipase activity" include a lipase enzyme preparation. Commercially available lipase enzyme preparations may be used. Examples of the commercially available enzyme preparation that can be used as a lipase include Lipase AY "Amano" 30SD (Amano Enzyme Inc.), Lipase DF "Amano" 15 (Amano Enzyme Inc.), Lipase MER "Amano" (Amano Enzyme Inc.), and Lipase MHA "Amano" 10SD (Amano Enzyme Inc.). The origins of the lipases of these commercially enzyme preparations are listed in Table 5 below. The lipases are derived, for instance, from the genus *Candida, Rhizopus,* and/or *Mucor.* Preferred is, for instance, *Candida cylindracea, Rhizopus oryzae,* or *Mucor javanicus.*

Examples of the above "food and raw material having lipase activity" include vegetables **(e.g.,** corn, tomatoes, radishes, cauliflowers, celery, pumpkins), fruits (e.g., strawberries, grapefruits, figs), and spices **(e.g.,** peppers, paprika, fennel, thyme, sage, capsicum, coriander) (see JP-A-H02-200163).

The value for lipase activity of the "composition for food products which has lipase activity" used in the present invention may be 0.001 U or more, 0.01 U or more, 0.1 U or more, 0.3 U or more, 0.5 U or more, 0.8 U or more, 1 U or more, 3 U or more, 5 U or more, 8 U or more, or 10 U or more and may be 100,000 U or less, 90,000 U or less, 80,000 U or less, 70,000 U or less, or 60,000 U or less.

As used herein, the lipase activity value means the relative enzyme amount when 1 unit (U) is defined as the amount of enzyme that converts 1 µmol of substrate to produce p-nitrophenol per second under the following conditions.

A premix was prepared by mixing 5 mM 4-nitrophenyl decanoate (Sigma Aldrich) dissolved in acetonitrile, a 4-fold amount of 100 mM sodium phosphate buffer (pH 7.0), and a 4-fold amount of ultrapure water. Next, 90 µL each of the premix is dispensed onto a 96-well plate and incubated at 40°C. Then, 10 µL of "composition for food products which has lipase activity" serially diluted in 100 mM sodium phosphate buffer (pH 7.0) is added, and the reaction is initiated under the condition that the concentration of the substrate, 4-nitrophenyl decanoate, is 0.5 mM.

A415 of the above reaction solution is measured over time and the relationship between the reaction time and the amount of change in A415 is plotted. The amount of reaction product produced per unit time is considered as the enzyme activity, and the activity is calculated from the slope of the range where linearity is observed. The activity per unit weight of "composition for food products which has lipase activity" is calculated by defining one unit as the amount of enzyme that converts 1 µmol of substrate per second to produce p-nitrophenol. Note that the p-nitrophenol produced from the reaction solution may be quantified by comparison with the absorbance of a standard (KANTO CHEMICAL CO., INC.).

### (Beverage of the present invention)

The beverage of the present invention is not particularly limited as long as the beverage is produced by the production method of the present invention. The types of beverage in the present invention include beer-taste beverages, fruit wine beverages, fruit juice-containing alcoholic beverages, whiskeys, other alcoholic beverages, Japanese sakes, and the like. Among them, preferred are beer-taste beverages, fruit wine beverages, fruit juice-containing alcoholic beverages, whiskeys, or other alcoholic beverages. Among them, more preferred are beertasting beverages or fruit wine beverages. In addition, the beverage of the present invention may also be a beverage that has not undergone a fermentation process by microorganisms such as yeast. Preferable examples include a fermented beverage (preferably an alcoholic fermented beverage) that has undergone a fermentation process by microorganisms such as yeast (preferably yeast). Further, preferable examples of the beverage of the present invention include beverages with hops (preferably fermented beverages, more preferably alcoholic fermented beverages), beverages with malt (preferably fermented beverages, more preferably alcoholic fermented beverages), and beverages with hops and malt (preferably fermented beverages, more preferably alcoholic fermented beverages). Note that the fermentation herein includes alcohol fermentation, lactic acid fermentation, acetic acid fermentation, or the like. Preferred is alcohol fermentation. As used herein, the term "alcohol fermentation" refers to the production of alcohol from sugars through microbial metabolism; the term "lactic acid fermentation" refers to the production of lactic acid from sugars through microbial metabolism; and the term "acetic acid fermentation" refers to the production of acetic acid from alcohol through microbial metabolism.

The alcohol content of the beverage of the present invention is not particularly limited, and the beverage may be alcoholic or non-alcoholic. The lower limit of the alcohol content of the above alcoholic beverage may be, for example, 1% v/v or more, 1.5% v/v or more, 2% v/v or more, 2.5% v/v or more, 3% v/v or more, 3.5% v/v or more, 4% v/v or more, 4.5% v/v or more, 5% v/v or more, 5.5% v/v or more, 6% v/v or more, 6.5% v/v or more, 7% v/v or more, 7.5% v/v or more, 8% v/v or more, 8.5% v/v or more, 9% v/v or more, 9.5% v/v, 10% v/v or more, 11% v/v or more, 12% v/v or more, 13% v/v or more, 14% v/v or more, 15% v/v or more, 16% v/v or more, 17% v/v or more, 18% v/v or more, 19% v/v or more, 20% v/v or more, 25% v/v or more, 30% v/v or more, 35% v/v or more, 40% v/v or more, 45% v/v or more, or 50% v/v or more. In addition, the upper limit of the alcohol content of the above alcoholic beverage may be, for example, 60% v/v or less, 50% v/v or less, 35% v/v or less, 20% v/v or less, 15% v/v or less, 10% v/v or less, 9.5% v/v or less, 9% v/v or less, 8.5% v/v or less, 8% v/v or less, 7.5% v/v or less, 7% v/v or less, 6.5% v/v or less, 6% v/v or less, 5.5% v/v or less, 5% v/v or less, 4.5% v/v or less, 4% v/v or less, 3.5% v/v or less, or 3% v/v or less.

The above non-alcoholic beverage is a beverage substantially free of alcohol. The alcohol content of the non-alcoholic beverage may be less than 1% v/v, less than 0.5 % v/v, less than 0.1% v/v, less than 0.05% v/v (0.0% v/v), or less than 0.005% v/v (0.00% v/v). The non-alcoholic beverage may be a non-alcoholic beverage that has not undergone a fermentation process by microorganisms such as yeast; however, a non-alcoholic fermented beverage that has undergone a fermentation process by microorganisms such as yeast is preferred.

As used herein, the term "beer-taste beverage" refers to a beverage having a beer-like flavor, and includes those classified as "beers", "sparkling liquors", "other brewed liquors", "liqueurs", or "miscellaneous liquors" under the Liquor Tax Act as of October 1, 2020. The beer-taste beverage may be a beer-taste alcoholic beverage having an alcohol content of 1% v/v or more, or may be a non-alcoholic beer-taste beverage having an alcohol content of less than 1% v/v.

As the above non-alcoholic beer-taste beverage, a beverage that has not undergone a fermentation process by microorganisms such as yeast may be used; however, it is preferably a beverage that has undergone a fermentation process (preferably alcohol fermentation) by microorganisms such as yeast (preferably yeast). Examples of the non-alcoholic beer-taste beverage that has undergone a fermentation process by microorganisms such as yeast include beverages obtained by a method in which the alcohol fermentation period by microorganisms such as yeast is shortened as compared with the method of producing ordinary beer-taste beverages containing alcohol; beverages obtained by using microorganisms such as yeast having low or no alcohol-producing ability; beverages obtained by suppressing alcohol fermentation by microorganisms such as yeast at a low temperature; beverages obtained by removing microorganisms such as yeast in the middle of alcohol fermentation; and beverages obtained by subjecting an alcohol-containing beer-taste beverage to a dealcoholization process. Note that the term "alcohol" herein means ethanol unless otherwise mentioned.

The beer-taste beverage of the present invention is preferably a beer-taste fermented beverage that has undergone a fermentation (preferably alcoholic fermentation) process by yeast. In addition, the beer-taste beverage of the present invention may be a beer-taste beverage produced using both hops and malt; a beer-taste beverage produced using hops but not malt; a beer-taste beverage produced without using hops but using malt; or a beer-taste beverage produced without using either hops or malt. Among these, preferred examples include beer-taste beverages produced using both hops and malt, those produced using hops but not malt, and those produced without using hops but using malt. Among these, more preferred examples include beer-taste fermented beverages (preferably beer-taste alcoholic fermented beverages) produced using both hops and malt, those produced using hops but not malt (preferably beer-taste alcoholic fermented beverages), and those produced without using hops but using malt (preferably beer-taste alcoholic fermented beverages). Among these, the most preferred example is a beer-taste fermented beverage (preferably a beer-taste alcoholic fermented beverage) produced using both hops and malt.

The beverage of the present invention, including the beer-taste beverage, may be produced without addition of an alcohol raw material; however, the alcohol raw material may also be added. Examples of the alcohol raw material include brewed alcohol, spirits **(e.g.,** rum, vodka, gin), liqueurs, whisky, brandy, and shochu **(e.g.,** continuously distilled shochu, singly distilled shochu). Note that when the beverage of the present invention is a beer-taste beverage and an alcohol raw material is added, spirits are preferably used as the alcohol raw material.

As used herein, the term "fruit wine beverage" means a beverage obtained by fermentation (preferably alcohol fermentation) of fruit juice. The fruit used as a raw material for the fruit wine is not particularly limited, but examples include at least one selected from the group consisting of grapes, apples, pears, peaches, lychees, plums, and apricots. Examples of the fruit wine beverage include wine (grape wine), cider, and fruit wine, and wine is preferred. Then, the fruit wine beverage is, in detail, "one that is produced by fermenting fruit (and water) as raw materials", and also includes those produced by fermenting fruit (and water) with added sugars. In addition, examples of the fruit wine beverage also include beverages in which alcohol or flavoring agents are added to "those obtained by fermenting fruit (and water) as raw materials", and the beverages are not limited to fruit wines as defined under the Liquor Tax Act. Furthermore, the examples include sweet fruit wines, sparkling liquors, other brewed liquors, spirits, liqueurs, and miscellaneous liquors as defined under the Liquor Tax Act, as well as alcoholic beverages produced using, as a base liquor, "those obtained by fermenting fruit (and water) as raw materials". Then, examples of the fruit wine beverage also include chuhai-taste beverages, cocktail beverages, sour beverages, and sparkling liquor beverages that are produced using "those obtained by fermenting fruit (and water) as raw materials". Also, other raw materials are not particularly limited as long as they are fermented by including fruit as a raw material.

As used herein, the term "wine" means a fermented beverage produced mainly from grape juice as a raw material. Examples of such "wine" include "beverages obtained by fermenting grapes (and water) as raw materials", "beverages obtained by fermenting grapes (and water) with added sugars", and "beverages to which alcohol or flavoring agents have been added after fermenting grapes (and water) as raw materials". Further, the term "wine" is not limited to fruit wines defined under the Liquor Tax Act, but examples thereof also include sweet fruit wines, sparkling liquors, other brewed liquors, spirits, liqueurs, and miscellaneous liquors as defined under the Liquor Tax Act, as well as alcoholic beverages produced using, as a base liquor, "those obtained by fermenting grapes (and water) as raw materials". Note that in the present invention, the term "wine" refers to a fermented beverage produced from grape juice as a principal raw material, and may also be a fermented beverage that is not classified as "fruit wine" or "sweet fruit wine" under the Liquor Tax Act. In addition, examples of the wine herein include chuhai-taste beverages, cocktail beverages, sour beverages, and sparkling liquor beverages that are produced using "those obtained by fermenting grapes (and water) as raw materials". The grape juice used for the production of "wine" may be straight juice, concentrated juice, or a mixture of both. In addition, other raw materials are not particularly limited as long as they are fermented by including grapes as a raw material.

As used herein, the term "cider" means a fermented beverage produced mainly from apple juice as a raw material. Examples of such "cider" include "beverages obtained by fermenting apple fruit (and water) as raw materials", "beverages obtained by fermenting apple fruit (and water) with added sugars", and "beverages to which alcohol or flavoring agents have been added after fermenting apple fruit (and water) as raw materials". Further, the term "cider" is not limited to fruit wines defined under the Liquor Tax Act, but examples thereof also include sweet fruit wines, sparkling liquors, other brewed liquors, spirits, liqueurs, and miscellaneous liquors as defined under the Liquor Tax Act, as well as alcoholic beverages produced using, as a base liquor, "those obtained by fermenting apple fruit (and water) as raw materials". Note that in the present invention, the term "cider" refers to a fermented beverage produced from apple juice as a principal raw material, and may also be a fermented beverage that is not classified as "fruit wine" or "sweet fruit wine" under the Liquor Tax Act. The apple juice used for the production of "cider" may be straight juice, concentrated juice, or a mixture of both. In addition, other raw materials are not particularly limited as long as they are fermented by including apples as a raw material.

As used herein, the term "fruit wine" means a fermented beverage produced mainly from, as a raw material, fruit juice other than grape juice and apple juice. Examples of such "fruit wine" include "beverages obtained by fermenting, as raw materials, fruits other than grapes and apples (and water)", "beverages obtained by fermenting fruits, other than grapes and apples, (and water) with added sugars", and "beverages to which alcohol or flavoring agents have been added after fermenting, as raw materials, fruits other than grapes and apples (and water)". Further, the term "fruit wine" is not limited to fruit wines defined under the Liquor Tax Act, but examples thereof also include sweet fruit wines, sparkling liquors, other brewed liquors, spirits, liqueurs, and miscellaneous liquors as defined under the Liquor Tax Act, as well as alcoholic beverages produced using, as a base liquor, "those obtained by fermenting, as raw materials, fruits other than grapes and apples (and water)". Note that in the present invention, the term "fruit wine" refers to a fermented beverage produced from, as a principal raw material, fruit juice other than grape juice and apple juice, and may also be a fermented beverage that is not classified as "fruit wine" or "sweet fruit wine" under the Liquor Tax Act. The juice, other than grape juice and apple juice, used for the production of "fruit wine" may be straight juice, concentrated juice, or a mixture of both. In addition, other raw materials are not particularly limited as long as they are fermented by including, as a raw material, fruit juice other than grape juice and apple juice.

As used herein, the term "fruit juice-containing alcoholic beverage" means an alcoholic beverage containing fruit juice not fermented (preferably alcohol fermentation). The fruit juice-containing alcoholic beverage refers more specifically to a beverage in which fruit juice is contained in an alcohol raw material, and which is produced by mixing, as necessary, water, flavoring agents, sugars, sweeteners, acidulants, and other food additives or other raw materials. Examples thereof include sprits such as so-called chuhai, cocktails, fizz, and wine coolers, and liqueurs. The alcohol raw material is not particularly limited, and examples thereof include brewed alcohol, spirits (e.g., rum, vodka, gin), liqueurs, whisky, brandy, and shochu (e.g., continuously distilled shochu, singly distilled shochu). Furthermore, brewed liquors such as wine and beer may also be used. Each of these alcohol raw materials may be used singly or in combination, but it is preferable to select an alcohol raw material that makes the most of its flavor. Preferred examples of the fruit juice-containing alcoholic beverage include fruit juice-containing alcoholic beverages produced using alcohol, which alcohol has undergone a yeastmediated alcohol fermentation process.

The beverage of the present invention, such as a beer-taste beverage, a fruit wine beverage, a fruit juice-containing alcoholic beverage, or other alcoholic beverages, may be either carbonated or non-carbonated. As used herein, the term "carbonated" refers to having a gas pressure of 0.049 MPa (0.5 kg/cm²) or more at 20°C, and the term "non-carbonated" refers to having a gas pressure of less than 0.049 MPa (0.5 kg/cm²) at 20°C.

### (Plant-derived raw material)

As used herein, the term "plant-derived raw material" is not particularly limited and may be in any form as long as the plant can be used as a raw material for the production of beverages. Examples of the plant-derived raw material include hops; grains such as malts, harvested cereals (that is, barley and similar grains, and wheat and similar grains) other than malt, corn, rice, and sorghum; tubers such as potatoes and sweet potatoes; legumes such as soybeans, peas, adzuki beans, mung beans, and broad beans; fruit juices and fruits; and spices such as chili pepper, mustard, wasabi, Japanese pepper (sansho), black pepper, ginger, saffron, coriander, cardamom, cumin, cinnamon, clove, nutmeg, mace, *Myristica,* allspice, bay leaves, oregano, melissa, basil, laurel, caraway, dill, eucalyptus, fennel, garlic, chamomile, juniper berry, lavender, marjoram, peppermint, rosemary, star anise, tarragon, thyme, valerian, paprika, anise, fenugreek, horseradish, leek, onion, parsley, sage, savory, sesame seed, turmeric, vanilla, gardenia, poppy seed, perilla, mugwort, wormwood, radish, celery, bouquet garni, quatre epices, chili powder, garam masala, pickling spice, shichimi togarashi, wu xiang (five-spice powder), Tabasco sauce, and curry powder. In addition to these, saccharide raw materials (sugars) such as starch, grits, and liquid sugar are also included. The plant-derived raw material may be a processed plant material, for example, proteins from a plant-derived raw material or proteolysis products. One kind of these plant-derived raw materials may be used singly or two or more kinds may be used in combination. Among these plant-derived raw materials, it is preferable to use at least hops, or hops and malt.

There are no particular restrictions to the above hops in terms of the variety, processed form, amount used, and/or stage of use in the production process.

Examples of hops variety include Cascade, Magnum, Kirin No. 2, Galaxy, Saaz, Hallertau Tradition, Bullion, Brewers Gold, Chinook, Cluster, East Kent Golding, Fuggles, Hallertau, Mount Hood, Northern Brewer, Perle, Styrian, Target, Tettnanger, Willamette, Hersbrucker, Bravo, Columbus, Herkules, Millennium, Nugget, Summit, Tomahawk, Warrior, Zeus, and Hallertau Perle. As the hops, one variety may be used singly, or two or more varieties may be used in combination.

Examples of the processed forms of hops include dried hops, pressed hops, hop pellets, fresh hops, hops powder, hops oil, hops extract, isomerized hops, rho hops, tetra hops, and hexa hops. As the hops, one type in the same processed form may be used singly, or two or more types in different processed forms may be used in combination.

The amount of hops used, for example, in terms of the amount of hops pellets (g) used relative to the volume (L) of raw material liquid, is 0.01 g/L or more, 0.1 g/L or more, 0.5 g/L or more, 1 g/L or more, 2.5 g/L or more, or 5 g/L or more, and also 50 g/L or less, 30 g/L or less, or 20 g/L or less.

When the beverage of the present invention is a beverage using hops, the stage at which the hops are used in the production process may be any stage as described above. For example, hops may be used "during the preparation of the raw material liquid (preferably during the preparation of the raw material liquid prior to fermentation)", "before the start of fermentation (preferably alcohol fermentation)", "during fermentation (preferably alcohol fermentation)", or "after the end of fermentation (preferably alcohol fermentation)".

The above malt can be obtained by germinating harvested cereals. As the harvested cereal, examples include barley, wheat, rye, wild oats, oats, Job's tears, and emmer wheat, and barley is preferably used. Malt contains malt extract. One type of malt may be used singly or different types may be used in combination.

As the harvested cereals other than the above malt, examples include harvested cereals such as barley, wheat, rye, oats, and Job's tears; and processed cereal products such as malt extract. The malt extract can be obtained by extracting from harvested cereals, the malt extract components containing saccharides and nitrogenous components. As the harvested cereals other than malt, one type may be used singly, or two or more types may be used in combination.

The above fruit juice may be processed fruit juice, such as concentrated fruit juice. In addition, the above fruits may also be processed fruits, such as dried or boiled fruits. Examples of the types of fruit juice or fruits include citrus fruits (e.g., orange, satsuma mandarin, grapefruit, lemon, lime, yuzu, iyokan, natsumikan, hassaku, ponkan, kinkan (*Citrus japonica*), yuzu (*Citrus junos*), shiikuwasha (*Citrus depressa*), kabosu, sudachi); pome fruits (e.g., apple, pear); stone fruits (e.g., peach, plum, apricot, Japanese plum, cherry); berry-type fruits (e.g., grape, cassis, blueberry); tropical, subtropical, or temperate fruits (e.g., pineapple, guava, banana, mango, lychee, kiwi); and fruit-type vegetables (e.g., strawberry, melon, watermelon). One type of fruit juices and/or fruits may be used singly or two or more types may be used in combination.

The percentage (percentage of malt used) of malt in the raw materials of the beverage (e.g., a beer-taste beverage) of the present invention is not particularly limited, and may be 100 wt%, 90 wt% or more, 67 wt% or more, 50 wt% or more, or 25 wt% or more, and less than 100 wt%, less than 90 wt%, less than 67 wt%, less than 50 wt%, or less than 25 wt%. The percentage (percentage of malt used) of malt in the raw materials is the ratio of the total weight of malt to the total weight of the raw materials.

### (Raw material liquid)

As used herein, the term "raw material liquid" means a raw material liquid containing at least water, a liquid raw material, or a mixture thereof, among the raw materials used in the production of the beverage of the present invention. Specific examples include "water itself", "fruit juice itself", a "liquid containing water and one or more raw materials other than water", a "liquid containing fruit juice and one or more raw materials other than fruit juice", a "liquid containing fruit juice and water", and a "liquid containing fruit juice, water, and one or more raw materials other than fruit juice and water". In addition, for convenience herein, any liquid present from the start of production until immediately before completion of the beverage product (e.g., a post-fermentation liquid) is referred to as the raw material liquid.

The raw material liquid in the present invention at the time of adding a composition for food products which has lipase activity may or may not contain a plant-derived raw material, but even if it does not, the plant-derived raw material will come into contact with the composition for food products which has lipase activity at any stage of the production process. Note that the composition for food products which has lipase activity may be brought into contact with all of the plant-derived raw materials used in the production of the beverage of the present invention, or only some of the plant-derived raw materials used, as long as the effect of the present invention is obtained.

The beverage of the present invention may be a beverage packaged in a container. Such a container means an airtight container that can cut off the contact between the contents and the outside air. Examples include metal cans, barrel containers, plastic bottles **(e.g.,** PET bottles, cups), paper containers, jars, and pouch containers.

### (Production method of the present invention)

The production method of the present invention is not particularly limited as long as the method is a method for producing a beverage, comprising step A of adding a composition for food products which has lipase activity to a raw material liquid, in the production of the beverage using a plant-derived raw material. The production method of the present invention can use a usual beverage production method, except that the method further comprises such step **A.**

### (Step A)

Step A in the present invention is not particularly limited as long as step A comprises adding a composition for food products which has lipase activity to a raw material liquid. The composition for food products which has lipase activity may be added to the raw material liquid, or may be added to other raw materials and then added together to the raw material liquid. Alternatively, the raw material liquid may be added to the composition for food products which has lipase activity.

Step A, in which the composition for food products which has lipase activity is added to the raw material liquid, may be at any stage of the production process of the beverage of the present invention, as long as the effect of the present invention is obtained. Examples include "during the preparation of the liquid before fermentation (preferably alcohol fermentation)", "before the start of fermentation (preferably alcohol fermentation)", "during fermentation (preferably alcohol fermentation)", and "after the end of fermentation (preferably alcohol fermentation)". Examples of the above wording "after the end of fermentation (preferably alcohol fermentation)" also includes "before the start of storage", "during storage", "after storage", "before filtration", "during filtration", "after filtration", and "before sterilization". In addition, the wording "during the preparation of the liquid before fermentation (preferably alcohol fermentation)" also includes, for example, "during cooling the raw material liquid such as wort", and "after cooling the raw material liquid such as wort". The composition for food products which has lipase activity may also be added in several separate stages at multiple times.

Note that since lipase is inactivated at high temperatures, it is preferable to add the lipase at a stage when the raw material liquid is not at such a high temperature in the production process of the beverage of the present invention, or to cool the raw material liquid to a temperature at which the lipase is not inactivated if the lipase is added at a stage where the raw material liquid is at a high temperature. The temperature of the raw material liquid when a composition for food products which has lipase activity is added may be set, as appropriate, by referring to the optimum temperature of the lipase contained in the composition for food products which has lipase activity. Since the optimum temperature of lipase is usually 60°C or less, preferable examples of the temperature of the above raw material liquid include 60°C or less or 50°C or less. For example, even if the temperature is more than 60°C and 95°C or less, the composition for food products which has lipase activity is added and the raw material liquid is then immediately cooled, so that the lipase activity remains at least to some extent. The lower limit of the temperature of the raw material liquid when the composition for food products which has lipase activity is added to the raw material liquid is not particularly limited, but examples include minus 10°C or higher, minus 5°C or higher, 0°C or higher, 3°C or higher, 5°C or higher, 10°C or higher, and 15°C or higher.

When the beverage of the present invention is a beer-taste beverage (e.g., a beer-taste beverage using malt), the preferred stage for adding the composition for food products which has lipase activity to the raw material liquid is after cooling the raw material liquid such as wort. After cooling the raw material liquid such as wort, specifically, any of the following stages is allowed: "after cooling the raw material liquid such as wort", "before the start of fermentation (preferably alcohol fermentation)", "during fermentation (preferably alcohol fermentation)", and "after the end of fermentation (preferably alcohol fermentation)". More specifically, any of the following stages is allowed: "after cooling the raw material liquid such as wort", "before the start of fermentation (preferably alcohol fermentation)", "during fermentation (preferably alcohol fermentation)", "before the start of storage", "during storage", "after storage", "before filtering", "during filtering", "after filtering", and "before sterilization".

The time during which the lipase activity remains active on the raw material liquid is not particularly limited as long as the effect of the present invention can be obtained, but the lower time limit is, for example, 2 hours or more, 1 day or more, 3 days or more, 1 week or more, 2 weeks or more, 1 month or more, 2 months or more, 3 months or more, 4 months or more, 6 months or more, 8 months or more, 10 months or more, 1 year or more, 1 year and 6 months or more, 2 years or more, or 3 years or more. The upper time limit is, for example, 10 years or less, 8 years or less, 6 years or less, 5 years or less, 4 years or less, 3 years or less, 2 years or less, 1 year and 6 months or less, 1 year or less, 10 months or less, 8 months or less, 6 months or less, 4 months or less, 3 months or less, 2 months or less, 1 month or less, 3 weeks or less, 2 weeks or less, or 1 week or less.

The "amount of composition for food products which has lipase activity to be used" in the production process of the present invention is not particularly limited as long as the effect of the present invention is obtained. The value for lipase activity of the "composition for food products which has lipase activity" added in the production method of the present invention may be 0.1 U or more, 0.3 U or more, 0.5 U or more, 0.8 U or more, 1 U or more, 3 U or more, 5 U or more, 8 U or more, or 10 U or more and may be 100,000 U or less, 90,000 U or less, 80,000 U or less, 70,000 U or less, or 60,000 U or less.

In another embodiment, in the production method of the present invention, the "amount of composition for food products which has lipase activity to be used" refers to the amount when, assuming that all of the raw materials of the beverage of the present invention are used to prepare a raw material liquid, the "composition for food products which has lipase activity" is added to that raw material liquid. In such cases, the amount to be used is such that the lipase activity value in the raw material liquid is, for example, 0.001 U/mL or more, 0.01 U/mL or more, 0.1 U/mL or more, or 0.5 U/mL or more, preferably 1 U/mL or more. The upper limit of the amount of "composition for food products which has lipase activity" to be used is not particularly limited, and is, for example, 10000 U/mL or less, 1000 U/mL or less, 100 U/mL or less, 10 U/mL or less, 5 U/mL or less, 3 U/mL or less, or 2 U/mL or less. More specifically, examples of the "amount of composition for food products which has lipase activity" to be used include 0.001 to 10000 U/mL, 0.001 to 1000 U/mL, 0.001 to 100 U/mL, 0.001 to 10 U/mL, 0.001 to 5 U/mL, 0.001 to 3 U/mL, 0.001 to 2 U/mL, 0.01 to 10000 U/mL, 0.01 to 1000 U/mL, 0.01 to 100 U/mL, 0.01 to 10 U/mL, 0.01 to 5 U/mL, 0.01 to 3 U/mL, 0.01 to 2 U/mL, 0.1 to 10000 U/mL, 0.1 to 1000 U/mL, 0.1 to 100 U/mL, 0.1 to 10 U/mL, 0.1 to 5 U/mL, 0.1 to 3 U/mL, 0.1 to 2 U/mL, 0.5 to 10000 U/mL, 0.5 to 1000 U/mL, 0.5 to 100 U/mL, 0.5 to 10 U/mL, 0.5 to 5 U/mL, 0.5 to 3 U/mL, 0.5 to 2 U/mL, 1 to 10000 U/mL, 1 to 1000 U/mL, 1 to 100 U/mL, 1 to 10 U/mL, 1 to 5 U/mL, 1 to 3 U/mL, and 1 to 2 U/mL. Preferred examples include 0.1 to 10000 U/mL, 0.1 to 1000 U/mL, 0.1 to 100 U/mL, 0.1 to 10 U/mL, 0.1 to 5 U/mL, 0.1 to 3 U/mL, 0.1 to 2 U/mL, 0.5 to 10000 U/mL, 0.5 to 1000 U/mL, 0.5 to 100 U/mL, 0.5 to 10 U/mL, 0.5 to 5 U/mL, 0.5 to 3 U/mL, 0.5 to 2 U/mL, 1 to 10000 U/mL, 1 to 1000 U/mL, 1 to 100 U/mL, 1 to 10 U/mL, 1 to 5 U/mL, 1 to 3 U/mL, and 1 to 2 U/mL.

The production method of the present invention may further comprise an optional step(s) in addition to step A. Examples of such an optional step(s) include a step of allowing microbial metabolism to act on the raw material liquid, a heat sterilization step, and a step of filling into a container. Preferred examples include a step of allowing microbial metabolism to act on the raw material liquid.

The "step of allowing microbial metabolism to act on the raw material liquid" described above is not particularly limited as long as it is a step in which microbial metabolism is allowed to act on the raw material liquid; however, preferred examples include a step in which microorganisms are brought into contact with the raw material liquid so that the microorganisms assimilate the raw material liquid, and more preferred examples include a step in which the microorganisms are brought into contact with the raw material liquid so that yeast carry out alcohol fermentation. In addition, a preferred embodiment of the "step of allowing microbial metabolism to act on the raw material liquid" is a step in which the microbial metabolism is allowed to act on the raw material liquid in the presence of a composition for food products which has lipase activity. The species of the above "microorganisms" is not particularly limited as long as the effect of the present invention can be obtained. Preferred examples include yeast. The amount of microorganisms to be used may be determined, if appropriate, by a person skilled in the art.

The species of microorganisms mentioned above is not particularly limited as long as the effect of the present invention is obtained, but examples include one or more species selected from the group consisting of yeast and bacteria. The microorganism used in the present invention may be a microorganism having the ability to produce alcohol through fermentation, or a microorganism having no ability to produce alcohol, as long as the effect of the present invention can be obtained.

The species of "yeast" is not particularly limited as long as the species can be used for foods and beverages. Examples include microorganisms belonging to the genera *Saccharomyces, Torulopsis, Mycotorula, Torulaspora, Candida, Rhodotorula, Pichia, Saccharomycopsis,* and *Brettanomyces.* Preferred is the genus *Saccharomyces.* Specific examples of yeast species usable in the present invention include one or more species selected from the group consisting of *Saccharomyces cerevisiae, Saccharomyces carlsbergensis, Saccharomyces uvarum, Saccharomyces rouxii, Saccharomyces lipolytica, Saccharomyces ludwigii, Saccharomyces pastorianus, Saccharomyces bayanus, Torulopsis utilis, Torulopsis candida, Mycotorula japonica, Mycotorula lipolytica, Torulaspora delbrueckii, Torulaspora fermentati, Candida sake, Candida tropicalis, Candida utilis, Pichia anomala, Pichia suaveolens, Pichia farinosa, Rhodotorula rubra, Saccharomycopsis fibligera, Brettanomyces anomalus,* and *Brettanomyces bruxellensis. Saccharomyces cerevisiae* and *Saccharomyces pastorianus* are preferred.

The species of "bacteria" described above are not particularly limited, and examples include one or more species selected from the group consisting of lactic acid bacteria, bacteria of the genus *Bifidobacterium,* and bacteria of the genus *Clostridium.* Preferred examples include one or more species selected from the group consisting of lactic acid bacteria and bacteria of the genus *Bifidobacterium.*

### (Lactic acid bacterium)

The "lactic acid bacterium" is a general term for all the lactic acid bacteria recognized in the classification and is not limited by, for instance, the genus, the species, and the strain. Examples of such a "lactic acid bacterium" include a bacterium that produces a large amount of lactic acid (preferably, 50% or more of the consumed sugar) by lactic acid fermentation of sugar. Examples include bacteria belonging to the genera *Lactococcus, Lactobacillus, Streptococcus, Leuconostoc, Pediococcus,* and *Enterococcus.*

The genus or species of the lactic acid bacteria is not particularly limited, and examples include one or more bacterial species selected from the group consisting of bacteria belonging to the genera *Lactococcus, Lactobacillus, Streptococcus, Leuconostoc, Pediococcus,* and *Enterococcus.* Preferred are one or more species of bacterium selected from the group consisting of bacteria of the genus *Lactococcus* and bacteria of the genus *Lactobacillus.* More preferred are one or more species of bacterium selected from the group consisting of *Lactococcus lactis* and *Lactobacillus paracasei.* Still more preferred are one or more species of bacterium selected from the group consisting of *Lactococcus lactis* subsp. *lactis.*

As more specific and preferred embodiments of the lactic acid bacteria used in the present invention, examples include one or more bacterial species selected from the group consisting of *Lactococcus lactis* subsp. *lactis* (e.g., *Lactococcus lactis* subsp. *lactis* JCM 5805, NBRC 12007, NRIC 1150, JCM 20101, JCM 7638, ATCC 11454), *Lactococcus* subsp. *lactis biovar diacetylactis, Lactococcus lactis* subsp. *cremoris* (e.g., *Lactococcus lactis* subsp. *cremoris* JCM 16167, NBRC 100676), *Lactococcus raffinolactis, Lactococcus piscium, Lactococcus plantarum, Lactococcus garvieae* (e.g., *Lactococcus garvieae* NBRC 100934), *Lactococcus lactis* subsp. *hordniae* (e.g., *Lactococcus lactis* subsp. *hordniae* JCM 1180, JCM 11040), *Lactobacillus acidophilus* (e.g., *Lactobacillus acidophilus* L-92), *Lactobacillus delbrueckii* subsp. *bulgaricus, Lactobacillus delbrueckii* subsp. *delbrueckii, Lactobacillus delbrueckii* subsp. *lactis, Lactobacillus casei, Lactobacillus paracasei* (e.g., *Lactobacillus paracasei* strains KW3110 and MCC1849), *Lactobacillus gasseri* (e.g., *Lactobacillus gasseri* strain SBT2055), *Lactobacillus helveticus, Lactobacillus johnsonii, Lactobacillus plantarum* (e.g., *Lactobacillus plantarum* strain L-137), *Lactobacillus brevis, Lactobacillus casei* subsp. *rhamnosus* (e.g., *Lactobacillus casei* subsp. *rhamnosus* strain GG), *Lactobacillus pentosus, Lactobacillus fermentum, Lactobacillus fructivorans, Lactobacillus hilgardii, Streptococcus salivarius* subsp. *thermophilus, Leuconostoc mesenteroides* subsp. *cremoris, Leuconostoc lactis, Pediococcus damnosus, Pediococcus pentosaceus, Pediococcus acidilactici* (e.g., *Pediococcus acidilactici* strains JCM 8797 and K15), *Enterococcus faecalis, Pediococcus cellicola, Pediococcus claussenii, Pediococcus ethanolidurans, Pediococcus inopinatus, Pediococcus parvulus, Pediococcus stilesii, and Enterococcus faecium.* Preferred examples include one or more bacterial species selected from the group consisting of *Lactococcus lactis* subsp. *lactis, Lactococcus lactis biovar diacetylactis, Lactococcus lactis* subsp. *cremoris, Lactococcus raffinolactis, Lactococcus piscium, Lactococcus plantarum, Lactococcus garvieae, Lactococcus lactis* subsp. *hordniae, Lactobacillus acidophilus, Lactobacillus delbrueckii* subsp. *bulgaricus, Lactobacillus delbrueckii* subsp. *lactis, Lactobacillus delbrueckii* subsp. *delbrueckii, Lactobacillus casei, Lactobacillus paracasei, Lactobacillus gasseri, Lactobacillus helveticus, Lactobacillus johnsonii, Lactobacillus plantarum, Lactobacillus brevis, Lactobacillus casei* subsp. *rhamnosus, Lactobacillus pentosus, Lactobacillus fermentum, Streptococcus salivarius* subsp. *thermophilus, Leuconostoc mesenteroides* subsp. *cremoris,* and *Leuconostoc lactis.* More preferred examples include one or more bacterial species selected from the group consisting of *Lactococcus lactis* subsp. *lactis, Lactococcus lactis biovar diacetylactis, Lactococcus lactis* subsp. *cremoris, Lactococcus raffinolactis, Lactococcus piscium, Lactococcus plantarum, Lactococcus garvieae, Lactococcus lactis* subsp. *hordniae, Lactobacillus acidophilus, Lactobacillus delbrueckii* subsp. *bulgaricus, Lactobacillus delbrueckii* subsp. *lactis, Lactobacillus delbrueckii* subsp. *delbrueckii, Lactobacillus casei, Lactobacillus paracasei, Lactobacillus gasseri, Lactobacillus helveticus, Lactobacillus johnsonii, Lactobacillus plantarum, Lactobacillus brevis, Lactobacillus casei* subsp. *rhamnosus, Lactobacillus pentosus,* and *Lactobacillus fermentum.* Still more preferred examples include one or more bacterial species selected from the group consisting of *Lactococcus lactis* subsp. *lactis* and *Lactobacillus paracasei.* Still more preferred examples include one or more bacterial species selected from the group consisting of *Lactococcus lactis* subsp. *lactis* JCM 5805, *Lactococcus lactis* subsp. *lactis* JCM 20101, *Lactococcus lactis* subsp. *lactis* NBRC 12007, *Lactococcus lactis* subsp. *lactis* NRIC 1150, *Lactococcus lactis* subsp. *lactis* JCM 7638, *Lactococcus lactis* subsp. *lactis* ATCC 11454, *Lactobacillus paracasei* KW3110, *and Lactobacillus paracasei* MCC1849. Particularly preferred examples include one or more bacterial species selected from the group consisting of *Lactococcus lactis* subsp. *lactis* JCM 5805, *Lactobacillus paracasei* KW3110, and *Lactobacillus paracasei* MCC1849. More preferred examples include *Lactococcus lactis* subsp. *lactis* JCM5805.

The JCM strains among the above strains of lactic acid bacterium are available from the Microbial Materials Development Laboratory, RIKEN BioResource Center (3-1-1, Koyadai, Tsukuba, Ibaraki); the NBRC strains are available from Biological Resource Center, the National Institute of Technology and Evaluation (2-5-8, Kazusakamatari, Kisarazu, Chiba); the NRIC strains are available from the Culture Collection Center at Tokyo University of Agriculture (1-1-1 Sakuragaoka, Setagaya-ku, Tokyo); and the ATCC strains are available from American Type Culture Collection (USA), respectively.

*Lactococcus lactis* subsp. *lactis* JCM5805 strain can be obtained from the Microbial Materials Development Laboratory, RIKEN BioResource Center as described above. However, it is possible to use, in the present invention, the same strain as JCM5805 strain, which strain is stored in repositories other than the Microbial Materials Development Laboratory, RIKEN BioResource Center. Specifically, the same strain as JCM5805 strain can be obtained from the Biological Resource Center, the National Institute of Technology and Evaluation (2-5-8, Kazusakamatari, Kisarazu, Chiba), the Culture Collection Center at Tokyo University of Agriculture (1-1-1 Sakuragaoka, Setagaya-ku, Tokyo), American Type Culture Collection (USA), and others.

### (Bacteria of the genus Bifidobacterium)

The species of bacteria belonging to the genus *Bifidobacterium* are not particularly limited, and examples include one or more bacterial species selected from the group consisting of *Bifidobacterium bifidum, Bifidobacterium breve, Bifidobacterium longum* subsp. *longum, Bifidobacterium longum* subsp. *infantis, Bifidobacterium animalis* subsp. *animalis, Bifidobacterium animalis* subsp. *lactis, Bifidobacterium adolescentis, Bifidobacterium angulatum, Bifidobacterium catenulatum,* and *Bifidobacterium pseudocatenulatum.* Preferred examples include one or more bacterial species selected from the group consisting of *Bifidobacterium bifidum, Bifidobacterium breve, Bifidobacterium longum* subsp. *longum, Bifidobacterium longum* subsp. *infantis, Bifidobacterium animalis* subsp. *animalis,* and *Bifidobacterium animalis* subsp. *lactis.*

### (Bacteria of the genus Clostridium)

Examples of the species of the genus *Clostridium* include the species that can be used in foods and beverages, specifically *Clostridium butyricum,* also known as butyric acid bacteria.

The production method of the present invention may include a step of treatment with activated carbon, but it is preferable not to include a step of treatment with activated carbon. The step of treatment with activated carbon includes, for example, a treatment step of bringing activated carbon into contact with a liquid after fermentation, such as a liquid after alcohol fermentation.

### (Beverage with enhanced citrus fruit aroma)

As used herein, the term "citrus fruit aroma" refers to the fragrance of citrus fruits. More specifically, examples include a fragrance derived from β-citronellol, nerol, and geraniol; a citrus fruit fragrance containing a fragrance derived from β-citronellol, nerol, and geraniol; a fragrance derived from β-citronellol, nerol, and/or geraniol; a citrus fruit fragrance containing a fragrance derived from β-citronellol, nerol, and/or geraniol; a fragrance derived from β-citronellol and nerol; a citrus fruit fragrance containing a fragrance derived from β-citronellol and nerol; a fragrance derived from linalool, β-citronellol, nerol, and/or geraniol; and a citrus fruit fragrance containing a fragrance derived from linalool, β-citronellol, nerol, and/or geraniol.

The beverage of the present invention is a beverage in which the concentrations of β-citronellol, nerol, and geraniol are increased, and the citrus fruit aroma is thus enhanced; or a beverage in which the concentrations of β-citronellol, nerol, and/or geraniol are increased, and the citrus fruit aroma is thus enhanced; or a beverage in which the concentrations of β-citronellol and nerol are increased, and the citrus fruit aroma is thus enhanced. Preferred is a beverage in which the "concentrations of β-citronellol, nerol, and geraniol", the "concentrations of β-citronellol, nerol, and/or geraniol", and/or the "concentrations of linalool, β-citronellol, nerol, and/or geraniol" are increased, thereby enhancing the citrus fruit aroma. Examples of the "concentrations of β-citronellol, nerol, and/or geraniol" above include the "total concentration of β-citronellol, nerol, and geraniol". Examples of the "concentrations of linalool, β-citronellol, nerol, and/or geraniol" above include the "total concentration of linalool, β-citronellol, nerol, and geraniol".

As used herein, the term beverage in which the concentrations of β-citronellol, nerol, and geraniol are increased refers to a beverage in which the concentrations of β-citronellol, nerol, and geraniol are higher than those in a tea beverage (hereinafter, also referred to as the "control beverage of the present invention") that is produced using the same types of raw materials and by the same production method, except that the composition for food products which has lipase activity is not added to the raw material liquid. The term beverage in which the concentrations of β-citronellol, nerol, and/or geraniol are increased herein refers to a beverage in which the concentrations of β-citronellol, nerol, and/or geraniol are higher than those in the control beverage of the present invention. The term beverage in which the concentrations of linalool, β-citronellol, nerol, and/or geraniol are increased herein refers to a beverage in which the concentrations of linalool, β-citronellol, nerol, and/or geraniol are higher than those in the control beverage of the present invention.

The concentrations of β-citronellol, nerol, and/or geraniol in the beverage and the concentrations of linalool, β-citronellol, nerol, and/or geraniol in the beverage can be determined, for example, by appropriately diluting the beverage and then by gas chromatography-mass spectrometry (GC-MS).

As used herein, the term beverage with an enhanced citrus fruit aroma means a beverage with an enhanced citrus fruit aroma compared to the control beverage in the present invention.

Trained panelists can easily and clearly determine how much is the citrus fruit aroma and how such a citrus fruit aroma is like (for example, it is enhanced or not) when compared with the control beverage of the present invention.

### (Enhancement method of the present invention)

The enhancement method of the present invention is not particularly limited as long as the method is a method of increasing, for example, "concentrations of β-citronellol, nerol, and geraniol", "concentrations of β-citronellol, nerol, and/or geraniol", and/or "concentrations of linalool, β-citronellol, nerol, and/or geraniol" in a beverage using a plant-derived raw material to enhance a citrus fruit aroma, the method comprising the step of adding a composition for food products which has lipase activity to a raw material liquid during production of the beverage. Examples of the above "concentrations of β-citronellol, nerol, and geraniol" and/or "concentrations of β-citronellol, nerol, and/or geraniol" include the "total concentration of β-citronellol, nerol, and geraniol". Examples of the "concentrations of linalool, β-citronellol, nerol, and/or geraniol" above include the "total concentration of linalool, β-citronellol, nerol, and geraniol".

Step A and the optional step(s), etc., are the same as those described above in the section (Production method of the present invention).

Hereinafter, the present invention is described in detail with Examples, but the present invention is not limited to these Examples.

### Examples

### [Test 1] How addition of composition for food products which has lipase activity affects citrus fruit aroma components, etc., of beverage

The following tests were conducted to investigate how the addition of a composition for food products which has lipase activity affected the citrus fruit aroma components, etc., of a beverage.

### (Production of 100% malt sample beverage)

Malt was coarsely ground and dissolved in hot raw material water. The resulting liquid was saccharified and the husks were separated to obtain wort. Next, 0.2 g/L of hops extract, which was intended to impart bitterness, was added to this wort and boiled for 60 minutes. After boiling, the wort was collected and cooled. Water was then added as needed to adjust the sugar content to obtain wort with a sugar content of 11°P. This wort is 100% malt wort, i.e., all-malt wort. To this wort, 5 g/L of Cascade hops pellets was added to impart a fragrance. Next, yeast was added to a concentration of about 11 million cells/mL. Then, a lipase enzyme preparation (Lipase AY "Amano" 30SD; Amano Enzyme Inc.) was added to provide an enzyme activity of 3 U/mL. After that, alcohol fermentation was continued for 7 days. Subsequently, the resulting material was stored for 7 days, cooled, and filtered to obtain a sample beverage (Example 1).

In addition, a sample beverage (Comparative Example 1) was also obtained by the same production method except that no lipase enzyme preparation was added. The sample beverages in Example 1 and Comparative Example 1 are 100% malt beer-taste beverages.

### (Production of 50% malt sample beverage)

Malt was coarsely ground and dissolved in hot raw material water. The obtained liquid was saccharified, the husks were separated, and maltose-based liquid sugar (manufactured by Nippon Shokuhin Kako Co., Ltd.) was added to obtain a raw material liquid at 50% malt content. Next, 0.2 g/L of hops extract, which was intended to impart bitterness, was added to this wort and boiled for 60 minutes. Water was then added as needed to adjust the sugar content to obtain wort with a sugar content of 11°P. This wort is a 50% malt wort. To this wort, 5 g/L of Cascade variety hops pellets was added to impart a fragrance. Next, yeast was added to a concentration of about 11 million cells/mL. Then, a lipase enzyme preparation (Lipase AY "Amano" 30SD; Amano Enzyme Inc.) was added to provide an enzyme activity of 3 U/mL. After that, alcohol fermentation was continued for 7 days. Subsequently, the resulting material was stored for 7 days, cooled, and filtered to obtain a sample beverage (Example 2).

In addition, a sample beverage (Comparative Example 2) was also obtained by the same production method except that no lipase enzyme preparation was added. The sample beverages in Example 2 and Comparative Example 2 are 50% malt beer-taste beverages.

### (Production of 0% malt sample beverage)

Liquid sugar (manufactured by Nippon Shokuhin Kako Co., Ltd.), which is mainly composed of maltose, was added to water to obtain a raw material liquid. Next, 0.2 g/L of hops extract, which was intended to impart bitterness, was added to this raw material liquid and boiled for 60 minutes. Water was then added as needed to adjust the sugar content to obtain a raw material liquid with a sugar content of 11°P. This raw material liquid is 0% malt. To this raw material liquid, 5 g/L of Cascade variety hops pellets was added to impart a fragrance. Next, yeast was added to a concentration of about 11 million cells/mL. Then, a lipase enzyme preparation (Lipase AY "Amano" 30SD; Amano Enzyme Inc.) was added to provide an enzyme activity of 3 U/mL. After that, alcohol fermentation was continued for 7 days. Subsequently, the resulting material was stored for 7 days, cooled, and filtered to obtain a sample beverage (Example 3).

In addition, a sample beverage (Comparative Example 3) was also obtained by the same production method except that no lipase enzyme preparation was added. The sample beverages in Example 3 and Comparative Example 3 are 0% malt beer-taste beverages.

### (Measurement of concentrations of specific terpenes)

The concentrations (ppb) of β-citronellol, nerol, geraniol, and linalool in each of the sample beverages in Examples 1 to 3 or Comparative Examples 1 to 3 were measured by gas chromatography with mass spectrometer (GC-MS). Table 1 shows the results. Note that the "ppb" herein denotes mass per unit mass.

### (Measurement of concentrations of ethyl acetate and isoamyl acetate)

In order to clarify the difference from Patent Document 4 in the Background Art, the concentrations (ppm) of ethyl acetate and isoamyl acetate for each of the sample beverages in Examples 1 to 3 or Comparative Examples 1 to 3 were measured by a headspace gas chromatograph with FID (hydrogen flame ionization detector). Table 1 also shows the results.

### (Sensory evaluation test for citrus fruit aroma)

A sensory evaluation test was conducted by four trained expert panelists on the degree of citrus fruit aroma of each of the sample beverages in Examples 1 to 3 or Comparative Examples 1 to 3. The scores for the sensory evaluation were given on a 51-point scale from 0.0 to 5.0 in increments of 0.1, and the relative evaluation was made when the degree of citrus fruit aroma in the Comparative Example corresponding to the relevant Example was set at 2.0. Note that the term "citrus fruit aroma" here means a fragrance reminiscent of citrus fruits and other fruits. For the evaluation on the degree of citrus fruit aroma in each of the sample beverages of Examples, the average of the scores of all panelists, which average was rounded to the second decimal place, was used. Note that for each of the sample beverages of Examples in all the tables in the present application, the deviation of the scores on the degree of citrus fruit aroma between the panelists was within 0.6.

Table 1 shows the results of sensory evaluation tests for each of the sample beverages in Examples 1 to 3 or Comparative Examples 1 to 3.

**[Table 1]**

| | | 100% Malt | | 50% Malt | | 0% Malt | |
|---|---|---|---|---|---|---|---|
| | | Comparative Example 1 | Example 1 | Comparative Example 2 | Example 2 | Comparative Example 3 | Example 3 |
| Chemical analysis value (ppb) | Linalool | 200.1 | 211.1 | 207.3 | 214.8 | 199.8 | 218.4 |
| | β-Citronellol | 123.2 | 270.7 | 107.9 | 225.4 | 152.8 | 268.8 |
| | Nerol | 23.2 | 36.8 | 22.6 | 35.2 | 20.4 | 29.6 |
| | Geraniol | 204.6 | 303.8 | 208.8 | 381.2 | 142.5 | 276.8 |
| Degree (average) of citrus fruit aroma | | 2.0 | 4.3 | 2.0 | 3.7 | 2.0 | 3.8 |
| Ethyl acetate (ppm) | | 27.4 | 22.8 | 18.6 | 17.8 | 9.0 | 7.6 |
| Isoamyl acetate (ppm) | | 1.5 | 0.8 | 1.1 | 0.7 | 0.4 | 0.2 |

The results of Table 1 have demonstrated that the addition of the lipase enzyme preparation increased the concentrations of β-citronellol, nerol, and geraniol (β-citronellol and the like) while the linalool concentration remained almost the same, and the sensory evaluation tests showed that the citrus fruit aroma was actually enhanced. It was also shown that these effects of the lipase enzyme preparation were obtained regardless of the malt content.

In addition, the results for ethyl acetate and isoamyl acetate are also discussed. In the production method described in Patent Document 4 in the Background Art, the concentrations of both ethyl acetate and isoamyl acetate were clearly increased by adding a lipase enzyme (and by activated carbon treatment after alcohol fermentation). In contrast, as shown in the results of Table 1, the production method of the present invention did not clearly increase the concentrations of both ethyl acetate and isoamyl acetate, but rather decreased both of them. This has indicated that the production method of the present invention is clearly different from the production method described in Patent Document 4 in the Background Art.

### [Test 2] How timing of adding composition for food products which has having lipase activity affects citrus fruit aroma components, etc., of beverage

The following tests were conducted to investigate how the timing of adding a composition for food products which has lipase activity affected the citrus fruit aroma components, etc., of a beverage.

The sample beverage of Example 1 and sample beverage of Comparative Example 1 were obtained by the method described in [Test 1] above. Note that in the sample beverage of Example 1, a composition for food products which has lipase activity was added to wort before alcohol fermentation.

Meanwhile, the sample beverage of Example 4 was prepared by the same preparation method as that used for the sample beverage of Example 1, except that the composition for food products which has lipase activity was added to the beverage after alcohol fermentation but before storage, instead of being added to the wort before alcohol fermentation.

### (Measurement of concentrations of specific terpenes)

The concentrations (ppb) of β-citronellol, nerol, geraniol, and linalool in each of the sample beverages of Examples 1 and 4 or Comparative Example 1 were measured by gas chromatography with mass spectrometer (GC-MS). Table 2 shows the results.

### (Measurement of concentrations of ethyl acetate and isoamyl acetate)

In order to clarify the difference from Patent Document 4 in the Background Art, the concentrations (ppm) of ethyl acetate and isoamyl acetate for each sample beverage of Examples 1 and 4 or Comparative Example 1 were measured by headspace gas chromatograph with FID (hydrogen flame ionization detector). Table 2 also shows the results.

### (Sensory evaluation test for citrus fruit aroma)

By using the same method as the method described in [Test 1] above, a sensory evaluation test was conducted on the degree of citrus fruit aroma of each of the sample beverages of Examples 1 and 4 or Comparative Example 1. Table 2 shows the results of sensory evaluation tests for each of these sample beverages.

**[Table 2]**

| | | | Added before fermentation | Added after fermentation |
|---|---|---|---|---|
| | | Comparative Example 1 | Example 1 | Example 4 |
| Chemical analysis value (ppb) | Linalool | 200.1 | 211.1 | 213.0 |
| | β-Citronellol | 123.2 | 270.7 | 280.9 |
| | Nerol | 23.2 | 36.8 | 36.8 |
| | Geraniol | 204.6 | 303.8 | 306.0 |
| Degree (average) of citrus fruit aroma | | 2.0 | 4.3 | 4.4 |
| Ethyl acetate (ppm) | | 27.4 | 22.8 | 25.0 |
| Isoamyl acetate (ppm) | | 1.5 | 0.8 | 0.7 |

As shown in the results of Table 2, the addition of the lipase enzyme preparation increased the concentrations of β-citronellol and other compounds and actually enhanced the citrus fruit aroma, regardless of whether the addition took place before or after the alcohol fermentation of the raw material liquid.

In addition, the results for ethyl acetate and isoamyl acetate are also discussed. In the production method described in Patent Document 4 in the Background Art, the concentrations of both ethyl acetate and isoamyl acetate were clearly increased, for example, by adding a lipase enzyme (and by activated carbon treatment after alcohol fermentation). In contrast, as shown in the results of Table 2, the production method of the present invention did not clearly increase the concentrations of both ethyl acetate and isoamyl acetate, but rather decreased both of them. This has indicated that the production method of the present invention is clearly different from the production method described in Patent Document 4 in the Background Art.

### [Test 3] How variety of hops used together with composition for food products which has lipase activity affects citrus fruit aroma components, etc., of beverage

The following tests were conducted to investigate how the variety of hops used together with a composition for food products which has lipase activity affected the citrus fruit aroma components, etc., of a beverage.

The sample beverage of Example 1 and sample beverage of Comparative Example 1 were obtained by the method described in [Test 1] above. Note that Cascade variety hops were used in the sample beverages of Example 1 and Comparative Example 1.

Meanwhile, the sample beverages of Example 5 and Comparative Example 4 were prepared by the same preparation method as that used for the sample beverages of Example 1 and Comparative Example 1, respectively, except that Magnum variety hops were used instead of Cascade variety hops.

Meanwhile, the sample beverages of Example 6 and Comparative Example 5 were prepared by the same preparation method as that used for the sample beverages of Example 1 and Comparative Example 1, respectively, except that Kirin No. 2 variety hops were used instead of Cascade variety hops.

### (Measurement of concentrations of specific terpenes)

The concentrations (ppb) of β-citronellol, nerol, geraniol, and linalool in each of the sample beverages of Examples 1, 5, and 6 or Comparative Examples 1, 4, and 5 were measured by gas chromatography with mass spectrometer (GC-MS). Table 3 shows the results.

### (Sensory evaluation test for citrus fruit aroma)

By using the same method as the method described in [Test 1] above, a sensory evaluation test was conducted on the degree of citrus fruit aroma of each of the sample beverages of Examples 1, 5, and 6 or Comparative Examples 1, 4, and 5. Table 3 shows the results of sensory evaluation tests for each of these sample beverages. The degree of citrus fruit aroma in the Comparative Examples was set to 2.0 for Comparative Example 1 and 1.0 for Comparative Examples 4 and 5, according to the degree of citrus fruit aroma in each Comparative Example sample.

**[Table 3]**

| | | Cascade | | Magnum | | Kirin No. 2 | |
|---|---|---|---|---|---|---|---|
| | | Comparative Example 1 | Example 1 | Comparative Example 4 | Example 5 | Comparative Example 5 | Example 6 |
| Chemical analysis value (ppb) | Linalool | 200.1 | 211.1 | 208.8 | 197.0 | 249.7 | 219.7 |
| | β-Citronellol | 123.2 | 270.7 | 37.0 | 105.4 | 76.2 | 113.7 |
| | Nerol | 23.2 | 36.8 | 11.2 | 19.1 | 15.0 | 19.5 |
| | Geraniol | 204.6 | 303.8 | 84.9 | 173.9 | 86.9 | 144.9 |
| Degree (average) of citrus fruit aroma | | 2.0 | 4.3 | 1.0 | 2.2 | 1.0 | 1.9 |

As shown in the results of Table 3, the lipase enzyme preparation increased the concentrations of β-citronellol and other compounds and actually enhanced the citrus fruit aroma, regardless of the variety of hops used.

### [Test 4] How timing of adding hops and addition amount affects citrus fruit aroma components, etc., of beverage

The following tests were conducted to investigate how the timing of adding hops and the addition amount affected the citrus fruit aroma components, etc., of a beverage.

The sample beverage of Example 1 and sample beverage of Comparative Example 1 were obtained by the method described in [Test 1] above. Note that in the sample beverage of Example 1, a composition for food products which has lipase activity was added to wort before alcohol fermentation.

Meanwhile, the sample beverage of Example 7 was prepared by the same preparation method as that used for the sample beverage of Example 1, except that 5 g/L of Cascade variety hops pellets, which had been added before yeast addition, was added during wort boiling. In addition, the sample beverage of Comparative Example 6 was prepared by the same preparation method as that used for the sample beverage of Example 7, except that no composition for food products which has lipase activity was added.

In addition, the sample beverage of Example 8 was prepared by the same preparation method as that used for the sample beverage of Example 1, except that the amount of hops used was set to 0.5 g/L instead of 5 g/L. The sample beverage of Comparative Example 7 was prepared by the same preparation method as that used for the sample beverage of Example 8, except that no composition for food products which has lipase activity was added.

### (Measurement of concentrations of specific terpenes)

The concentrations (ppb) of β-citronellol, nerol, geraniol, and linalool in each of the sample beverages of Examples 1, 7, and 8 or Comparative Examples 1, 6, and 7 were measured by gas chromatography with mass spectrometer (GC-MS). Table 4 shows the results.

### (Sensory evaluation test for citrus fruit aroma)

By using the same method as the method described in [Test 1] above, a sensory evaluation test was conducted on the degree of citrus fruit aroma of each of the sample beverages of Examples 1, 7, and 8 or Comparative Examples 1, 6, and 7. Table 4 shows the results of sensory evaluation tests for each of these sample beverages.

Table 4 shows the results of sensory evaluation tests for each of the sample beverages in Examples 1, 7, and 8 or Comparative Examples 1, 6, and 7. The degree of citrus fruit aroma in the Comparative Examples was set to 2.0 for Comparative Example 1, 1.5 for Comparative Example 6, and 0.5 for Comparative Example 7, according to the degree of citrus fruit aroma in each Comparative Example sample.

**[Table 4]**

| | | Hops (5 g/L) added before fermentation | | Hops (5 g/L) added during wort boiling | | Hops (0.5 g/L) added before fermentation | |
|---|---|---|---|---|---|---|---|
| | | Comparative Example 1 | Example 1 | Comparative Example 6 | Example 7 | Comparative Example 7 | Example 8 |
| Chemical analysis value (ppb) | Linalool | 200.1 | 211.1 | 165.1 | 159.4 | 27.6 | 24.1 |
| | β-Citronellol | 123.2 | 270.7 | 121.5 | 191.8 | 26.6 | 50.9 |
| | Nerol | 23.2 | 36.8 | 22.1 | 30.2 | 5.2 | 6.7 |
| | Geraniol | 204.6 | 303.8 | 120.3 | 214.6 | 34.8 | 52.4 |
| Degree (average) of citrus fruit aroma | | 2.0 | 4.3 | 1.5 | 2.8 | 0.5 | 1.0 |

As shown in the results of Table 4, the addition of the lipase enzyme preparation increased the concentrations of β-citronellol and other compounds and actually enhanced the citrus fruit aroma, regardless of the timing of addition of hops and the addition amount.

### [Test 5] How type of lipase enzyme preparation affects citrus fruit aroma components, etc., of beverage

The following tests were conducted to investigate how the type of lipase enzyme preparation affected the citrus fruit aroma components, etc., of a beverage.

Malt was coarsely ground and dissolved in hot raw material water. The resulting liquid was saccharified and the husks were separated to obtain wort. Next, 0.2 g/L of hops extract, which was intended to impart bitterness, was added to this wort and boiled for 60 minutes. After boiling, the wort was collected and cooled. Water was then added as needed to adjust the sugar content to obtain wort with a sugar content of 11°P. This wort is 100% malt wort, i.e., all-malt wort. To this wort, 5 g/L of Cascade hops pellets was added to impart a fragrance. Next, yeast was added to a concentration of about 11 million cells/mL. Then, a lipase enzyme preparation (Lipase AY "Amano" 30SD; Amano Enzyme Inc.) was added to provide an enzyme activity of 3 U/mL. After that, alcohol fermentation was continued for 7 days. Subsequently, the resulting material was stored for 7 days, cooled, and filtered to obtain a sample beverage (Example 9).

In addition, a sample beverage of Comparative Example (Comparative Example 8) was also obtained by the same production method except that no lipase enzyme preparation was added. The sample beverages in Example 9 and Comparative Example 8 are 100% malt beer-taste beverages.

Meanwhile, the sample beverage of Example 10 was prepared by the same preparation method as that of the sample beverage of Example 9, except that Lipase DF "AMANO" 15 (manufactured by Amano Enzyme Inc.) was used instead of Lipase AY "AMANO" 30SD.

In addition, the sample beverage of Example 11 was prepared by the same preparation method as that of the sample beverage of Example 9, except that Lipase MER "AMANO" (manufactured by Amano Enzyme Inc.) was used instead of Lipase AY "AMANO" 30SD.

Further, the sample beverage of Example 12 was prepared by the same preparation method as that of the sample beverage of Example 9, except that Lipase MHA "AMANO" 10SD (manufactured by Amano Enzyme Inc.) was used instead of Lipase AY "AMANO" 30SD.

Note that in all Examples 9 to 12, the amount of lipase enzyme preparation added was 3 U/mL. The origin of the lipase enzyme in each lipase enzyme preparation and the lipase activity are shown in Table 5 below.

**[Table 5]**

| Enzyme preparation name | Origin | Lipase activity (U/mg) |
|---|---|---|
| Lipase AY "AMANO" 30SD | *Candida cylindracea* | 39.3 |
| Lipase DF "AMANO" 15 | *Rhizopus oryzae* | 9.0 |
| Lipase MER "Amano" | *Rhizopus oryzae* | 3.1 |
| Lipase MHA "AMANO" 10SD | *Mucor javanicus* | 1.1 |

### (Measurement of lipase activity of lipase enzyme preparation)

The lipase enzyme activity of each lipase enzyme preparation was measured by colorimetric quantification of p-nitrophenol produced from p-nitrophenyl derivative by absorbance at 415 nm (A415). Specific procedures are described below.

### (1) Preparation of enzyme reaction solution

A premix was prepared by mixing 5 mM 4-nitrophenyl decanoate (Sigma Aldrich) dissolved in acetonitrile, 4-fold amount of 100 mM sodium phosphate buffer (pH 7.0), and 4-fold amount of ultrapure water. Next, 90 µL each of the premix was dispensed onto a 96-well plate and incubated at 40°C. Then, 10 µL of enzyme preparation serially diluted in 100 mM sodium phosphate buffer (pH 7.0) was added, and the reaction was initiated under the condition that the concentration of the substrate, 4-nitrophenyl decanoate, was 0.5 mM.

### (2) Colorimetric quantification of activity

A415 of the above reaction solution was measured over time using a microplate reader (Molecular Devices), and the relationship between the reaction time and the amount of change in A415 was plotted. The amount of reaction product produced per unit time was considered as the enzyme activity, and the activity was calculated from the slope of the range where linearity was observed. The activity per unit weight of each enzyme preparation was calculated by defining one unit as the amount of enzyme that converts 1 µmol of substrate per second to produce p-nitrophenol. Note that the p-nitrophenol produced from the reaction solution was quantified by comparison with the absorbance of a standard

### (KANTO CHEMICAL CO., INC.).

### (Measurement of concentrations of specific terpenes)

The concentrations (ppb) of β-citronellol, nerol, geraniol, and linalool in each of the sample beverages in Examples 9 to 12 or Comparative Example 8 were measured by gas chromatography with mass spectrometer (GC-MS). Table 6 shows the results.

### (Sensory evaluation test for citrus fruit aroma)

By using the same method as the method described in [Test 1] above, a sensory evaluation test was conducted on the degree of citrus fruit aroma of each of the sample beverages of Examples 9 to 12 or Comparative Example 8. Table 6 shows the results of sensory evaluation tests for each of these sample beverages.

### (Measurement of concentration of ethyl caproate)

To clarify the difference from Patent Document 3 in the Background Art, the concentration (ppm) of ethyl caproate in each of the sample beverages in Examples 9 to 12 or Comparative Example 8 was measured by gas chromatography with mass spectrometer (GC-MS). Table 6 shows the results.

**[Table 6]**

| | | | Lipase AY | Lipase DF | Lipase MER | Lipase MHA |
|---|---|---|---|---|---|---|
| | | Comparative Example 8 | Example 9 | Example 10 | Example 11 | Example 12 |
| Chemical analysis value (ppb) | Linalool | 215.7 | 213.8 | 210.2 | 206.6 | 216.6 |
| | β-Citronellol | 161.8 | 265.2 | 187.8 | 180.9 | 427.1 |
| | Nerol | 20.4 | 29.1 | 23.9 | 23.7 | 33.7 |
| | Geraniol | 160.0 | 287.9 | 252.2 | 344.1 | 273.1 |
| Degree (average) of citrus fruit aroma | | 2.0 | 4.3 | 3.3 | 4.2 | 4.7 |
| Ethyl caproate (ppm) | | 0.05 | 0.08 | 0.04 | 0.05 | 0.04 |

As shown in the results of Table 6, the addition of the lipase enzyme preparation increased the concentrations of β-citronellol and other compounds and actually enhanced the citrus fruit aroma, regardless of the type of lipase enzyme preparation.

In addition, the results of Table 6 have demonstrated that the concentration of ethyl caproate was not particularly increased by the addition of the lipase enzyme preparation, indicating that the concentration of ethyl caproate is not related to the effect of the present invention. The results have indicated that the production method of the present invention is clearly different from the production method described in Patent Document 3 in the Background Art.

### [Test 6] How amount of lipase enzyme preparation used affects citrus fruit aroma components, etc., of beverage

The following tests were conducted to investigate how the amount of lipase enzyme preparation used affected the citrus fruit aroma components, etc., of a beverage. In order to clarify the difference from Patent Document 3 in the Background Art, the concentration of ethyl caproate was also measured.

The sample beverage of Example 9 and sample beverage of Comparative Example 8 were obtained by the method described in [Test 5] above. Note that in the sample beverage of Example 9, the amount of lipase enzyme preparation used is 3 U/mL.

Meanwhile, the sample beverage of Example 13 was prepared by the same preparation method as that used for the sample beverage of Example 9, except that the amount of lipase enzyme preparation used was set to 0.1 U/mL instead of 3 U/mL.

In addition, the sample beverage of Example 14 was prepared by the same preparation method as that used for the sample beverage of Example 9, except that the amount of lipase enzyme preparation used was set to 1 U/mL instead of 3 U/mL.

### (Measurement of concentrations of specific terpenes)

The concentrations (ppb) of β-citronellol, nerol, geraniol, and linalool in each of the sample beverages of Examples 9, 13, and 14 or Comparative Example 8 were measured by gas chromatography with mass spectrometer (GC-MS). Table 7 shows the results.

### (Sensory evaluation test for citrus fruit aroma)

By using the same method as the method described in [Test 1] above, a sensory evaluation test was conducted on the degree of citrus fruit aroma of each of the sample beverages of Examples 9, 13, and 14 or Comparative Example 8. Table 7 shows the results of sensory evaluation tests for each of these sample beverages.

### (Measurement of concentration of ethyl caproate)

The concentration (ppm) of ethyl caproate in each of the sample beverages in Examples 9, 13, and 14 or Comparative Example 8 was measured by gas chromatography with mass spectrometer (GC-MS). Table 7 shows the results.

**[Table 7]**

| | | | 0.1 U/mL | 1 U/mL | 3 U/mL |
|---|---|---|---|---|---|
| | | Comparative Example 8 | Example 13 | Example 14 | Example 9 |
| Chemical analysis value (ppb) | Linalool | 215.7 | 212.1 | 217.8 | 213.8 |
| | β-Citronellol | 161.8 | 154.3 | 196.0 | 265.2 |
| | Nerol | 20.4 | 25.7 | 30.5 | 29.1 |
| | Geraniol | 160.0 | 196.0 | 253.7 | 287.9 |
| Degree (average) of citrus fruit aroma | | 2.0 | 2.9 | 3.5 | 4.2 |
| Ethyl caproate (ppm) | | 0.05 | - | 0.03 | 0.08 |

As shown in the results of Table 7, the addition of the lipase enzyme preparation increased the concentrations of β-citronellol and other compounds and actually enhanced the citrus fruit aroma, regardless of the amount of lipase enzyme preparation used. It was also shown that the degree of citrus fruit aroma was enhanced to a greater extent as the amount of lipase enzyme preparation used increased.

In addition, the results of Table 7 have demonstrated that the concentration of ethyl caproate did not depend on the amount of lipase enzyme preparation added, indicating that the concentration of ethyl caproate is not related to the effect of the present invention. The results have indicated that the production method of the present invention is clearly different from the production method described in Patent Document 3 in the Background Art.

### [Test 7] How variety of grape used together with composition for food products which has lipase activity affects citrus fruit aroma components, etc., of fruit wine beverage

The following tests were conducted to investigate how the variety of grape used together with a composition for food products which has lipase activity affected the citrus fruit aroma components, etc., of a fruit wine beverage herein.

### (Production of sample beverages, namely fruit wine beverages herein)

Prepared were three types of grape juice concentrates: a light-colored Chardonnay grape juice concentrate, a mixture of four light-colored grape juice concentrates, and a red-colored Cabernet Sauvignon grape juice concentrate. The three types of diluted fruit juices were prepared by diluting each of the three types of fruit juices with water and adjusting the sugar content to 16°P for each.

To the Chardonnay diluted fruit juice, rehydrated dry yeast was added at 200 ppm. Then, a lipase enzyme preparation (Lipase AY "Amano" 30SD; Amano Enzyme Inc.) was added to provide an enzyme activity of 9 U/mL. After that, alcohol fermentation was continued for 14 days. The sample beverage (Example 15), namely a fruit wine beverage, was then prepared by cooling and centrifugation. The sample beverage of Example 16 was prepared by the same preparation method as that used for the sample beverage of Example 15, except that fruit juice obtained by diluting the mixture of four light-colored grape fruit juice concentrates was used instead of fruit juice obtained by diluting the light-colored Chardonnay grapes. The sample beverage of Example 3 was prepared by the same preparation method as that used for the sample beverage of Example 15, except that fruit juice obtained by diluting the red-colored Cabernet Sauvignon grapes (hereinafter, also indicated as "Cabernet S") was used instead of fruit juice obtained by diluting the light-colored Chardonnay grapes.

The sample beverages of Comparative Examples 9 to 11 were prepared by the same preparation method as that used for the sample beverages of Examples 15 to 17, except that no lipase enzyme preparation was added.

### (Measurement of concentrations of specific terpenes)

The concentrations (ppb) of linalool, β-citronellol, nerol, and geraniol in each of the sample beverages in Examples 15 to 17 or Comparative Examples 9 to 11 were measured by gas chromatography with mass spectrometer (GC-MS). Table 8 shows the results.

**[Table 8]**

| | | (Light-colored) Chardonnay | | (Light-colored) Mixture | | (Red-colored) Cabernet S | |
|---|---|---|---|---|---|---|---|
| | | Comparative Example 9 | Example 15 | Comparative Example 10 | Example 16 | Comparative Example 11 | Example 17 |
| Chemical analysis value (ppb) | Linalool | 4.2 | 5.4 | 5.2 | 7.8 | 5.3 | 6.0 |
| | β-Citronellol | 5.5 | 12.9 | 7.7 | 19.3 | 2.9 | 7.7 |
| | Nerol | 0.5 | 0.8 | 0.6 | 1.0 | 0.8 | 1.5 |
| | Geraniol | 8.2 | 7.5 | 8.5 | 8.9 | 10.5 | 12.9 |
| Total concentration (ppb) of β-citronellol, nerol, and geraniol | | 14.2 | 21.2 | 16.8 | 29.2 | 14.2 | 22.1 |
| Total concentration (ppb) of linalool, β-citronellol, nerol, and geraniol | | 18.4 | 26.6 | 22.0 | 37.0 | 19.5 | 28.1 |

The results of Table 8 have demonstrated that regardless of the grape juice variety used, the addition of the lipase enzyme preparation increased the "concentrations of linalool, β-citronellol, nerol, and/or geraniol" or "concentrations of β-citronellol, nerol, and geraniol". Note that in some cases, the addition of the lipase enzyme preparation reduced the concentration of geraniol slightly (Example 15). However, in each of Examples 15 to 17, the "total concentration of β-citronellol, nerol, and geraniol" and the "total concentration of linalool, β-citronellol, nerol, and geraniol" were clearly higher than in Comparative Example 9, in which no lipase enzyme preparation was added.

### [Test 8] How timing of adding composition for food products which has lipase activity affects citrus fruit aroma components, etc., of fruit wine beverage

The following tests were conducted to investigate how the timing of adding a composition for food products which has lipase activity affected the citrus fruit aroma components, etc., of a fruit wine beverage herein.

### (Production of sample beverages, namely fruit wine beverages herein)

The sample beverages of Examples 15 to 17 and sample beverages of Comparative Examples 9 to 11 were obtained by the method described in [Test 7] above. Note that in the sample beverages of Examples 15 to 17, a composition for food products which has lipase activity was added to diluted grape juice before alcohol fermentation.

Meanwhile, the sample beverages of Examples 18 to 20 were prepared by the same preparation method as that used for the sample beverages of Examples 15 to 17, except that the composition for food products which has lipase activity was added to the beverage after alcohol fermentation, instead of being added to the diluted grape juice before alcohol fermentation.

### (Measurement of concentrations of specific terpenes)

The concentrations (ppb) of linalool, β-citronellol, nerol, and geraniol in each of the sample beverages in Examples 15 to 20 or Comparative Examples 9 to 11 were measured by gas chromatography with mass spectrometer (GC-MS). Tables 9 and 10 show the results.

**[Table 9]**

| | | Chardonnay (light-colored) | | | Mixture (light-colored) | | |
|---|---|---|---|---|---|---|---|
| | | No addition | Added before fermentation | Added after fermentation | No addition | Added before fermentation | Added after fermentation |
| | | Comparative Example 9 | Example 15 | Example 18 | Comparative Example 10 | Example 16 | Example 19 |
| Chemical analysis value (ppb) | Linalool | 4.2 | 5.4 | 4.8 | 5.2 | 7.8 | 6.0 |
| | β-Citronellol | 5.5 | 12.9 | 7.9 | 7.7 | 19.3 | 10.6 |
| | Nerol | 0.5 | 0.8 | 0.6 | 0.6 | 1.0 | 0.8 |
| | Geraniol | 8.2 | 7.5 | 10.2 | 8.5 | 8.9 | 10.9 |
| Total concentration (ppb) of β-citronellol, nerol, and geraniol | | 14.2 | 21.2 | 18.7 | 16.8 | 29.2 | 22.3 |
| Total concentration (ppb) of linalool, β-citronellol, nerol, and geraniol | | 18.4 | 26.6 | 23.5 | 22.0 | 37.0 | 28.3 |

**[Table 10]**

| | | Cabernet S (red-colored) | | |
|---|---|---|---|---|
| | | No addition | Added before fermentation | Added after fermentation |
| | | Comparative Example 11 | Example 17 | Example 20 |
| Chemical analysis value (ppb) | Linalool | 5.3 | 6.0 | 5.7 |
| | β-Citronellol | 2.9 | 7.7 | 30.6 |
| | Nerol | 0.8 | 1.5 | 1.1 |
| | Geraniol | 10.5 | 12.9 | 14.2 |
| Total concentration (ppb) of β-citronellol, nerol, and geraniol | | 14.2 | 22.1 | 45.9 |
| Total concentration (ppb) of linalool, β-citronellol, nerol, and geraniol | | 19.5 | 28.1 | 51.6 |

The results of Tables 9 and 10 have demonstrated that the addition of the lipase enzyme preparation increased the "concentrations of linalool, β-citronellol, nerol, and/or geraniol" or "concentrations of β-citronellol, nerol, and geraniol" even before or after alcohol fermentation of the diluted grape juice, namely a raw material liquid. Note that in some cases, the addition of the lipase enzyme preparation reduced the concentration of geraniol slightly (Example 15). However, in each of Examples 15 to 20, the "total concentration of β-citronellol, nerol, and geraniol" and the "total concentration of linalool, β-citronellol, nerol, and geraniol" were clearly higher than in Comparative Examples 9 to 11, in which no lipase enzyme preparation was added.

### [Test 9] How amount of lipase enzyme preparation used affects citrus fruit aroma components, etc., of fruit wine beverage

The following tests were conducted to investigate how the amount of lipase enzyme preparation used affected the citrus fruit aroma components, etc., of a fruit wine beverage.

### (Production of sample beverages, namely fruit wine beverages herein)

A mixture of four light-colored grape juice concentrates and a red-colored Cabernet Sauvignon grape juice concentrate were prepared. Two types of diluted fruit juice were prepared by diluting each of these two types of fruit juice concentrates with water and adjusting the sugar content to 16°P for each.

To fruit juice obtained by diluting the mixture of four light-colored grape juice concentrates, rehydrated dry yeast was added at 200 ppm. Then, a lipase enzyme preparation (Lipase AY "Amano" 30SD; Amano Enzyme Inc.) was added to provide an enzyme activity of 3 U/mL. After that, alcohol fermentation was continued for 14 days. The sample beverage (Example 23), namely a fruit wine beverage, was then prepared by cooling and centrifugation. In addition, the sample beverages of Examples 22 and 21 were prepared by the same preparation method as that used for the sample beverage of Example 23, except that the lipase enzyme preparation was added to provide an enzyme activity of 1 U/mL (Example 22) or 0.1 U/mL (Example 21) instead of 3 U/mL. The sample beverage of Comparative Example 12 was prepared by the same preparation method as that used for the sample beverage of Example 23, except that no lipase enzyme preparation was added.

The sample beverage of Example 26 was prepared by the same preparation method as that used for the sample beverage of Example 23, except that fruit juice obtained by diluting the red-colored Cabernet Sauvignon ("Cabernet S") grapes was used instead of fruit juice obtained by diluting the mixture of four light-colored grape juice concentrates. In addition, the sample beverages of Examples 25 and 24 were prepared by the same preparation method as that used for the sample beverage of Example 26, except that the lipase enzyme preparation was added to provide an enzyme activity of 1 U/mL (Example 11) or 0.1 U/mL (Example 10) instead of 3 U/mL. The sample beverage of Comparative Example 13 was prepared by the same preparation method as that used for the sample beverage of Example 26, except that no lipase enzyme preparation was added.

### (Measurement of concentrations of specific terpenes)

The concentrations (ppb) of linalool, β-citronellol, nerol, and geraniol in each of the sample beverages in Examples 21 to 26 or Comparative Examples 12 and 13 were measured by gas chromatography with mass spectrometer (GC-MS). Table 11 shows the results.

### (Sensory evaluation test for citrus fruit aroma)

A sensory evaluation test was conducted by four trained expert panelists on the degree of citrus fruit aroma of each of the sample beverages in Examples 21 to 26 or Comparative Examples 12 and 13. The scores for the sensory evaluation were given on a 51-point scale from 0.0 to 5.0 in increments of 0.1, and the relative evaluation was made when the degree of citrus fruit aroma in the Comparative Example corresponding to the relevant Example was set at 2.0. Note that the term "citrus fruit aroma" here means a fragrance reminiscent of citrus fruits and other fruits. For the evaluation on the degree of citrus fruit aroma in each of the sample beverages of Examples, the average of the scores of all panelists, which average was rounded to the second decimal place, was used. Note that for each of the sample beverages of Examples in Table 11 in the present application, the deviation of the scores for the degree of citrus fruit aroma between the panelists was within 0.3.

Table 11 shows the results of sensory evaluation tests for each of the sample beverages in Examples 21 to 23 or Comparative Example 12. Table 12 shows the results of sensory evaluation tests for each of the sample beverages in Examples 24 to 26 or Comparative Example 13.

**[Table 11]**

| | | Mixture (light-colored) | | | |
|---|---|---|---|---|---|
| | | No addition | 0.1 U/mL | 1 U/mL | 3 U/mL |
| | | Comparative Example 12 | Example 21 | Example 22 | Example 23 |
| Chemical analysis value (ppb) | Linalool | 5.0 | 5.8 | 5.5 | 5.4 |
| | β-Citronellol | 3.7 | 5.6 | 8.1 | 8.8 |
| | Nerol | 0.5 | 0.7 | 0.7 | 0.7 |
| | Geraniol | 7.4 | 9.5 | 6.3 | 6.1 |
| Total concentration (ppb) of β-citronellol, nerol, and geraniol | | 11.6 | 15.8 | 15.1 | 15.6 |
| Total concentration (ppb) of linalool, β-citronellol, nerol, and geraniol | | 16.6 | 21.6 | 20.6 | 21.0 |
| Degree (average) of citrus fruit aroma | | 2.0 | 4.3 | 4.0 | 4.1 |

**[Table 12]**

| | | Cabernet S (red-colored) | | | |
|---|---|---|---|---|---|
| | | No addition | 0.1 U/mL | 1 U/mL | 3 U/mL |
| | | Comparative Example 13 | Example 24 | Example 25 | Example 26 |
| Chemical analysis value (ppb) | Linalool | 6.8 | 7.0 | 7.4 | 7.4 |
| | β-Citronellol | 1.8 | 2.2 | 4.2 | 5.2 |
| | Nerol | 1.0 | 1.1 | 1.3 | 1.3 |
| | Geraniol | 17.0 | 17.6 | 17.2 | 15.7 |
| Total concentration (ppb) of β-citronellol, nerol, and geraniol | | 19.8 | 20.9 | 22.7 | 22.2 |
| Total concentration (ppb) of linalool, β-citronellol, nerol, and geraniol | | 26.6 | 27.9 | 30.1 | 29.6 |
| Degree (average) of citrus fruit aroma | | 2.0 | 3.1 | 3.6 | 3.8 |

The results of Tables 11 and 12 have demonstrated that regardless of the amount of lipase enzyme preparation used, the addition of the lipase enzyme preparation increased the "concentrations of linalool, β-citronellol, nerol, and/or geraniol" or "concentrations of β-citronellol, nerol, and geraniol" and actually enhanced the citrus fruit aroma. Note that in some cases, the addition of the lipase enzyme preparation reduced the concentration of geraniol slightly (Example 26). However, in each of Examples 24 to 26, the "total concentration of β-citronellol, nerol, and geraniol" and the "total concentration of linalool, β-citronellol, nerol, and geraniol" were clearly higher than in Comparative Example 13, in which no lipase enzyme preparation was added, and the citrus fruit aroma was found to be actually enhanced.

In addition, in the case of using the mixture of light-colored grape juices, the degree of citrus fruit aroma was generally similar regardless of the amount of lipase enzyme preparation used. It was also shown that in the case of using the red-colored grape Cabernet S juice, the degree of citrus fruit aroma was enhanced to a greater extent as the amount of lipase enzyme preparation used increased.

### [Test 10] How type of lipase enzyme preparation affects citrus fruit aroma components, etc., of fruit wine beverage

The following tests were conducted to investigate how the type of lipase enzyme preparation affected the citrus fruit aroma components, etc., of a fruit wine beverage.

### (Production of sample beverages, namely fruit wine beverages herein)

The sample beverage of Example 23 and sample beverage of Comparative Example 12 were obtained by the method described in [Test 9] above. Note that in the sample beverage of Example 23, Lipase AY "Amano" 30SD (manufactured by Amano Enzyme Inc.), as a lipase enzyme preparation, was added to the diluted grape juice before alcohol fermentation.

Meanwhile, the sample beverage of Example 27 was prepared by the same preparation method as that of the sample beverage of Example 23, except that Lipase DF "AMANO" 15 (manufactured by Amano Enzyme Inc.) was used instead of Lipase AY "AMANO" 30SD.

In addition, the sample beverage of Example 28 was prepared by the same preparation method as that of the sample beverage of Example 23, except that Lipase MER "AMANO" (manufactured by Amano Enzyme Inc.) was used instead of Lipase AY "AMANO" 30SD.

Further, the sample beverage of Example 29 was prepared by the same preparation method as that of the sample beverage of Example 23, except that Lipase MHA "AMANO" 10SD (manufactured by Amano Enzyme Inc.) was used instead of Lipase AY "AMANO" 30SD.

Note that in all Examples 23 and 27 to 29, the amount of lipase enzyme preparation added was 3 U/mL.

### (Measurement of concentrations of specific terpenes)

The concentrations (ppb) of linalool, β-citronellol, nerol, and geraniol in each of the sample beverages in Examples 23 and 27 to 29 or Comparative Example 12 were measured by gas chromatography with mass spectrometer (GC-MS). Table 13 shows the results.

### (Sensory evaluation test for citrus fruit aroma)

By using the same method as the method described in [Test 9] above, a sensory evaluation test was conducted on the degree of citrus fruit aroma of each of the sample beverages in Examples 23 and 27 to 29 or Comparative Example 12. Table 13 shows the results of sensory evaluation tests for each of these sample beverages.

**[Table 13]**

| | | Mixture (light-colored) | | | | |
|---|---|---|---|---|---|---|
| | | No addition | Lipase DF | Lipase MER | Lipase MHA | Lipase AY |
| | | Comparative Example 12 | Example 27 | Example 28 | Example 29 | Example 23 |
| Chemical analysis value (ppb) | Linalool | 5.0 | 4.8 | 6.6 | 5.8 | 5.4 |
| | β-Citronellol | 3.7 | 5.7 | 6.7 | 6.7 | 8.8 |
| | Nerol | 0.5 | 0.6 | 0.6 | 0.6 | 0.7 |
| | Geraniol | 7.4 | 8.1 | 7.3 | 7.4 | 6.1 |
| Total concentration (ppb) of β-citronellol, nerol, and geraniol | | 11.6 | 14.4 | 14.6 | 14.7 | 15.6 |
| Total concentration (ppb) of linalool, β-citronellol, nerol, and geraniol | | 16.6 | 19.2 | 21.2 | 20.5 | 21.0 |
| Degree (average) of citrus fruit aroma | | 2.0 | 3.7 | 4.1 | 3.9 | 4.1 |

The results of Table 13 have demonstrated that regardless of the type of lipase enzyme preparation, the addition of the lipase enzyme preparation increased the "concentrations of linalool, β-citronellol, nerol, and/or geraniol" or "concentrations of β-citronellol, nerol, and geraniol" and actually enhanced the citrus fruit aroma.

Note that in some cases, the addition of the lipase enzyme preparation reduced the concentration of geraniol slightly (Examples 23 and 28). However, in each of Examples 23 and 27 to 29, the "total concentration of β-citronellol, nerol, and geraniol" and the "total concentration of linalool, β-citronellol, nerol, and geraniol" were clearly higher than in Comparative Example 12, in which no lipase enzyme preparation was added, and the citrus fruit aroma was found to be actually enhanced.

### [Test 11] How color (e.g., red or white) of fruit wine beverage affects citrus fruit aroma components, etc., of fruit wine beverage

The following tests were conducted to investigate how the color of fruit wine beverage affected the citrus fruit aroma components, etc., of the fruit wine beverage.

### (Production of sample beverages, namely fruit wine beverages herein)

The sample beverages of Examples 23 and 26 and sample beverages of Comparative Examples 12 and 13 were obtained by the method described in [Test 9] above. Note that in the sample beverages of Example 23 and Comparative Example 12, a mixture of four light-colored grape juices was used. In the sample beverages of Example 26 and Comparative Example 13, red-colored Cabernet Sauvignon grape juice was used.

### (Measurement of concentrations of specific terpenes)

The concentrations (ppb) of linalool, β-citronellol, nerol, and geraniol in each of the sample beverages in Examples 23 and 26 or Comparative Examples 12 and 13 were measured by gas chromatography with mass spectrometer (GC-MS). Table 14 shows the results.

### (Sensory evaluation test for citrus fruit aroma)

By using the same method as the method described in [Test 9] above, a sensory evaluation test was conducted on the degree of citrus fruit aroma of each of the sample beverages in Examples 23 and 26 or Comparative Examples 12 and 13. Table 14 shows the results of sensory evaluation tests for each of these sample beverages.

**[Table 14]**

| | | Mixture (light-colored) | | Cabernet S (red-colored) | |
|---|---|---|---|---|---|
| | | No addition | Lipase AY | No addition | Lipase AY |
| | | Comparative Example 12 | Example 23 | Comparative Example 13 | Example 26 |
| Chemical analysis value (ppb) | Linalool | 5.0 | 5.4 | 6.8 | 7.4 |
| | β-Citronellol | 3.7 | 8.8 | 1.8 | 5.2 |
| | Nerol | 0.5 | 0.7 | 1.0 | 1.3 |
| | Geraniol | 7.4 | 6.1 | 17.0 | 15.7 |
| Total concentration (ppb) of β-citronellol, nerol, and geraniol | | 11.6 | 15.6 | 19.8 | 22.2 |
| Total concentration (ppb) of linalool, β-citronellol, nerol, and geraniol | | 16.6 | 21.0 | 26.6 | 29.6 |
| Degree (average) of citrus fruit aroma | | 2.0 | 4.1 | 2.0 | 3.8 |

The results of Table 14 have demonstrated that regardless of the color of fruit wine beverage (for example, red or white), the addition of the lipase enzyme preparation increased the "concentrations of linalool, β-citronellol, nerol, and/or geraniol" and actually enhanced the citrus fruit aroma.

Note that in Examples 23 and 26, the addition of the lipase enzyme preparation reduced the concentration of geraniol slightly. However, in each of Examples 23 and 26, the "total concentration of β-citronellol, nerol, and geraniol" and the "total concentration of linalool, β-citronellol, nerol, and geraniol" were clearly higher than in Comparative Example 12 or 13, in which no lipase enzyme preparation was added, and the citrus fruit aroma was found to be actually enhanced.

### Industrial Applicability

The present invention can provide, for example, a beverage in which the concentrations of β-citronellol, nerol, and geraniol are increased and the citrus fruit aroma is enhanced, a method for producing the beverage, and a method of increasing the concentrations of β-citronellol, nerol, and geraniol in a beverage to enhance a citrus fruit aroma. Note that the above "concentrations of β-citronellol, nerol, and geraniol" may be the "concentrations of β-citronellol, nerol, and/or geraniol" or the "concentrations of linalool, β-citronellol, nerol, and/or geraniol".

## Claims

1. A method for producing a beverage, comprising step A of adding a composition for food products which has lipase activity to a raw material liquid, in the production of the beverage using a plant-derived raw material.

2. The production method according to claim 1, wherein the composition for food products which has lipase activity is added so that the lipase activity per mL of the raw material liquid is 0.01 U or more.

3. The production method according to claim 1, wherein step A of adding the composition for food products which has lipase activity to the raw material liquid is performed at one or more stages selected from the group consisting of during preparation of a pre-fermentation liquid, before a start of fermentation, during fermentation, and after an end of fermentation.

4. The production method according to claim 1, wherein the beverage is selected from the group consisting of beer-taste beverages, fruit wine beverages, fruit juice-containing alcoholic beverages, and whiskeys.

5. The production method according to claim 1, wherein the beverage is a beer-taste beverage or a fruit wine beverage.

6. The production method according to claim 4, wherein when the production method of the beverage includes steps of heating and cooling the raw material liquid, step A of adding the composition for food products which has lipase activity to the raw material liquid is performed during or after the step of cooling the raw material liquid.

7. The production method according to claim 1, wherein the plant-derived raw material is one or more materials selected from the group consisting of hops, malt, harvested cereals other than malt, grains, tubers, beans, fruit juices, fruits, and spices.

8. The production method according to claim 1, comprising a step of allowing microbial metabolism to act on the raw material liquid.

9. A beverage produced by the production method according to any one of claims 1 to 8.

10. A method of enhancing a citrus fruit aroma of a beverage in the production of the beverage using a plant-derived raw material, the method comprising step A of adding a composition for food products which has lipase activity to a raw material liquid, to increase concentrations of β-citronellol, nerol, and geraniol in the beverage.

11. A method of enhancing a citrus fruit aroma of a beverage in the production of the beverage using a plant-derived raw material, the method comprising step A of adding a composition for food products which has lipase activity to a raw material liquid, to increase a total concentration of β-citronellol, nerol, and geraniol in the beverage.

12. A method of enhancing a citrus fruit aroma of a beverage in the production of the beverage using a plant-derived raw material, the method comprising step A of adding a composition for food products which has lipase activity to a raw material liquid, to increase a total concentration of linalool, β-citronellol, nerol, and geraniol in the beverage.
